(19) Europäisches Patentamt
European Patent Office
Office européen des brevets

(11) EP 4 489 028 A1

(12) **EUROPEAN PATENT APPLICATION**

(43) Date of publication:
08.01.2025 Bulletin 2025/02

(21) Application number: 23306150.6

(22) Date of filing: 07.07.2023

(51) International Patent Classification (IPC):
*G21K 1/00* (2006.01)   *G02F 1/33* (2006.01)
*G06N 10/40* (2022.01)

(52) Cooperative Patent Classification (CPC):
**G21K 1/00; G06N 10/00; G06N 10/40**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Pasqal**
**91300 Massy (FR)**

(72) Inventors:
• **DREON, Davide**
**91300 MASSY (FR)**
• **FAVIER, Pierre**
**91300 MASSY (FR)**
• **NGUYEN, Catherine**
**91300 MASSY (FR)**

(74) Representative: **Slingsby Partners LLP**
**1 Kingsway**
**London WC2B 6AN (GB)**

(54)   **SYSTEMS AND METHODS FOR INTERACTING WITH A MATTER PARTICLE**

(57)   There is presented, a system (2) for forming a plurality of focussed electromagnetic, EM, radiation regions, for interacting with one or more matter particles; the matter particles act as qubits in a quantum computation. The system comprising: I) a source assembly (8) comprising a plurality of emitters (10) wherein each emitter is configured to generate and output EM radiation (12); the plurality of emitters comprising at least a first emitter and a second emitter; the source assembly configured to independently change the intensity of EM radiation output from the assembly from the first emitter and the second emitter; II) a focussing assembly comprising one or more EM focussing elements; the focussing assembly configured to focus EM radiation to form: a first focussed EM region, of the plurality of EM regions (14), using EM radiation output from the first emitter; a second focussed EM region, of the plurality of EM regions, using EM radiation output from the second emitter. The first EM region occupying a different portion of space to the second EM region; wherein: a) the source assembly is configured such that the first and second emitters are upon a unitary device; and/or, b) the EM regions form one or more traps for the matter particles.

Fig. 7

**Description**

Technical Field

The present invention is in the field of electromagnetic signals, in particular, but not limited to traps for holding matter particles for quantum computation.

Background

Matter particles such as ions or neutral atoms may be used in various systems including quantum computation. Such systems typically require matter particles to be held in a particular position whilst an operation is performed on them with an external stimulus such as laser light. One such system is a neutral atom quantum computer wherein different patterns of traps are required to be consecutively set-up. In these systems, atoms are trapped in arrays of optical traps, known as optical tweezers, which are tightly focused laser beams produced by sending a beam into a beam-shaping device and high-numerical aperture optics. A spatial light modulator (SLM) can be used as a suitable beam-shaping device, enabling arranging the tweezers in programmable arbitrary geometric patterns in 1D, 2D or 3D shapes.

Liquid Crystal SLMs are known to be used as beam shaping devices to separate a single laser beam into multiple traps. Another approach is using Acousto-Optic Deflectors (AOD) to generate multiple beams. These current solutions have slow refresh rates of the device when different geometrical patterns need to be used in succession. In addition, current prior art solutions do not provide individual addressability of the sites in a given pattern.

The existing alternative solutions have limitations. AODs have the problem of not being adapted to arbitrary geometrical patterns (if not done by time multiplexing) and the addressability also must be done either by entire columns or by lines since the deflections are applied subsequently. Digital micromirrors devices (DMD) have a higher refresh rate but not sufficient for many applications, and they are limited in optical power efficiency.

WO2021/112948 describes optical holographic addressing of atomic quantum bits. In the background section of this document there is described arrays of vertical-cavity surface-emitting lasers (VCSELs) for visible light, along with the limitations of using VCSELs for such a system. In paragraph 0060, WO2021/112948 briefly describes, with respect to figure 7 of the same document, using an array of coherent light sources, such as VCSELs, where each laser is actuated to produce a corresponding spatial-mode distribution. WO2021/112948 does not provide an enabling disclosure for how to use VCSELs in such a system.

Summary

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

In a first aspect there is presented a system (2) for use in a quantum computation; the system (2) comprising: I) a chamber (4) for accommodating a plurality of spatially separated matter particles (6) for use as qubits in the quantum computation; II) a source assembly (8) comprising a plurality of surface-emitting electromagnetic, EM, sources (10) configured to output EM radiation (12); the system (2) configured to form a plurality of regions (14) of the EM radiation in the chamber (4), wherein at least two (16) of the plurality of regions (14) are for interacting with at least one of the spatially separated matter particles (6). In other words, at least a first and second region (16) of the plurality of regions (14) are each for interacting with at least one of the spatially separated matter particles (6). For example, both regions may interact with the same one (or more) matter particles, or each region may interact with one (or more) different matter particles.

The system of the first aspect may be adapted according to any suitable way disclosed herein, including but not limited to any one or more of the following options. It is to be understood that any of the following options may be combined with any of the examples described elsewhere herein.

The system may be configured such that: a first region of the plurality of regions is for trapping a first matter particle; a second region of the plurality of regions is for trapping a second matter particle; the first region being spatially separate to the second region.

The system may be configured such that the surface emitting EM source comprises a VCSEL.

The system may be configured such that at least two of the plurality of emitters are located upon a common device.

The system may be configured such that the at least two emitters comprise a 2D array of emitters.

The system may be configured to independently control the output of EM radiation from at least one of the emitters.

The system may be configured to control the EM intensity arriving at a trapping region from a plurality of the emitters.

The system may be configured to independently control the EM intensity arriving at a trapping region from each of the plurality of the emitters.

The system may be configured such that the EM radiation intensity for at least one emitter is controlled by directly modulating the emitter with electrical current.

Associated with the first aspect there is presented a method of forming regions of electromagnetic, EM, radiation for interacting with at least one of a plurality of spatially separated matter particles for a quantum computation, using the system of any of claims 1 to 9; the method comprising: I) outputting EM radiation from a plurality of surface-emitting electromagnetic, EM, sources (10) into a chamber (4) accommodating the plurality of spatially separated matter particles (6); II) forming a plurality of regions (14) of the EM radiation in the chamber (4), wherein at least two (16) of the plurality of regions (14) are for interacting with the at least one of the spatially separated matter particles (6).

Further associated with the first aspect there is presented a system (2) for use in a quantum computation; the system (2) comprising: I) a chamber (4) for accommodating a plurality of spatially separated matter particles (6) for use as qubits in the quantum computation; II) a source assembly (8) comprising a plurality of electromagnetic, EM, sources (10) configured to output EM radiation (12); the system (2) configured to form a plurality of regions (14) of the EM radiation in the chamber (4), wherein at least two (16) of the plurality of regions (14) are for interacting with at least one of the spatially separated matter particles (6).

The above system may be adapted according to any suitable way disclosed herein, including but not limited to any one or more of the following options and any of the above options for the first aspect. It is to be understood that any of the following options may be combined with any of the examples described elsewhere herein.

The system may be configured such that: a first region of the plurality of regions is for trapping a first matter particle; a second region of the plurality of regions is for trapping a second matter particle; the first region being spatially separate to the second region.

The system may be configured such that at least two of the plurality of emitters are located upon a common device.

The system may be configured such that the at least two emitters comprise a 2D array of emitters.

The system as claimed may be configured to independently control the output of EM radiation from at least one of the emitters.

The surface-emitting EM sources may be coherent light sources.

The array of VCSELs may be formed as a single unitary device.

Each surface-emitting EM source may be independently modulated.

The surface-emitting EM sources may be controlled to output an intensity in a continuous range between a maximum intensity and an off-state.

The system may further comprise an electrical power unit which is adapted to modulate the EM sources.

The electrical power unit may be configured to modulate the signal amplitude on each of the plurality of surface emitting EM sources.

The electrical power unit may be configured to modulate the driving current on each of the plurality of surface emitting EM sources.

The source assembly may further comprise at least one optical modulator to modulate the EM radiation from at least one of the EM sources.

The plurality of matter particles may be neutral atoms.

The system further comprises an imaging assembly between the chamber and source assembly to transport the EM radiation as one or more optical beams.

The imaging assembly may comprise optical components which comprise an individual lens assembly for each surface emitting EM source or group of EM sources. The lens assemblies may comprise a combination of optical components, such as one or more lenses, one or more mirrors or a combination of lenses and mirrors.

The EM radiation may be used to trap the matter particles on an atomic plane within the chamber.

The trapped matter particles may form a quantum register.

Each surface emitting EM source may trap an individual matter particle.

The EM radiation may be for optically exciting the spatially separated matter particles to fluoresce, for example at a wavelength between 700 and 850 nm, preferably at 780 nm.

The chamber may be a vacuum chamber for containing the plurality of spatially separated matter particles in the form of a gas.

The imaging assembly may be configured to alter the pattern of the plurality of optical beams to create geometrical patterns which are not limited to the pattern of the plurality of EM sources.

The source assembly may further comprise a fibre optic array.

The source assembly may further comprise a photonic integrated circuit.

In a second aspect there is presented a system (500) for forming electromagnetic, EM, radiation for interacting with a plurality of matter particles (504) in an interaction region (516), the matter particles acting as qubits in a quantum computation; the system comprising: a plurality of EM emitters (506, 506a, 506b) for generating EM radiation (508a, 508b), the system configured to form an EM intensity distribution (514a, 514b) of the EM radiation in the interaction region for each of the EM emitters; the plurality of EM emitters comprises: i) a first set of two or more of the plurality of EM emitters associated with a first matter particle of the plurality of matter particles; and ii) further EM emitters associated with one or more different matter particles to the first matter particle; wherein the system is further configured such that the EM radiation generated by each of the EM emitters of the first set forms an intensity distribution covering a different portion of the interaction region to the EM distributions of: a) the other EM emitters within the first set; and b) the further EM emitters.

The above system of the second aspect may be adapted according to any suitable way disclosed herein, including but not limited to any one or more of the following options and any of the above options for the first aspect. It is to be understood that any of the following options may be combined with any of the examples described elsewhere herein.

The system may be configured such that the interaction region comprises a plurality of subregions; the first set of EM emitters is associated with a first subregion of the plurality of subregions, the further EM emitters are associated with one or more further subregions of the plurality of subregions, and each of the subregions covers a different spatial extent of the interaction region to the other subregions.

The system may be configured such that the plurality of EM emitters comprises a second set of two or more of the plurality of EM emitters associated with a second matter particle of the plurality of matter particles.

The system may be configured such that each of the EM emitters of the second set forms an intensity distribution covering a different portion of the interaction region to the EM distributions of: a) the other EM emitters within the second set; b) the EM emitters within the first set; and c) the further EM emitters.

The system may be configured such that the plurality of subregions are non-overlapping.

The system may be configured to form an irregular pattern of EM distributions in the interaction region.

The system may be configured such that each of the EM distributions is associated with a position in the interaction region, the system further configured such that the positions of the EM distributions associated with the first set of emitters are arranged in a regular pattern within the first subregion.

The system may be configured such that the first subregion is associated with the first matter particle, and the one or more further subregions are associated with one or more different matter particles to the first matter particle.

The system may be configured to receive a plurality of input electrical signals, the signals determining the outputting of radiation from each of the EM emitters, a first set of the plurality of electrical signals configured to determine the output of radiation from a first emitter of the first set of EM emitters, and a second set of the plurality of electrical signals configured to determine the output of radiation from a second emitter of the first set of EM emitters.

The system may be configured such that the first set of electrical signals is received before the second set of electrical signals.

The system may be configured such that the interaction region is a 3D portion of space.

The system may be configured to form an optical trap (502) for holding a matter particle (504) for a quantum computation; the system comprising: I) a plurality of emitters (506, 506a, 506b) wherein each emitter is configured to output light (508a, 508b); II) a focussing assembly (510) comprising one or more optical focussing elements (512); the focussing assembly configured to focus the output light into a interaction region (516) to form the optical trap (502); wherein the optical trap comprises overlapping intensity distributions (514a/b) of at least two (506a, 506b) of the plurality of emitters.

The system may be configured such that at least one of the emitters comprises a surface emitting EM source.

The system may be configured such that the surface emitting EM source comprises a VCSEL.

The system may be configured such that at least two of the plurality of emitters are located upon a common device.

The system may be configured such that the at least two emitters comprise a 2D array of emitters.

The system may be configured to independently control the output of EM radiation from at least one of the emitters.

The system may be configured to control the EM intensity arriving at the trapping region from a plurality of the emitters.

The system may be configured to independently control the EM intensity arriving at the trapping region from each of the plurality of the emitters.

The system may be configured such that the EM radiation intensity for at least one emitter is controlled by directly modulating the emitter with electrical current.

The system may be configured such that: I) the EM trap is a first EM trap; II) a first set of two or more of the plurality of emitters output EM radiation with overlapping intensity distributions in the trapping region forming the first EM trap; III) a second set of two or more of the plurality of emitters output EM radiation with overlapping intensity distributions in the trapping region forming a second EM trap; the emitters of the first set being different to the emitters of the second set; the EM radiation intensity distribution of the first trap being spatially separated from the EM distribution of the second trap.

The system may be configured such that: The EM trap is a first EM trap; the at least two emitters for forming the first EM trap are first and second emitters; the system comprises a third emitter of the plurality of emitters; the focussing assembly is configured to focus EM radiation from the third emitter into the trapping area to form a second EM trap; the system is configured such that the first and second EM trap are spatially separated from each other.

The system may be configured such that: the system comprises a fourth emitter of the plurality of emitters; the focussing assembly is configured to focus EM radiation from the fourth emitter into the trapping area to form the second EM trap with the EM radiation from the third emitter; wherein the second EM trap comprises overlapping intensity distributions of at least the third and fourth emitters.

Associated with the second aspect, there is presented a method of forming electromagnetic, EM, radiation for interacting with a plurality of matter particles (504) in an interaction region (516), the matter particles acting as qubits in a quantum computation; the method comprising: generating EM radiation from a plurality of EM emitters (506, 506a, 506b); forming an EM intensity distribution (514a, 514b) of the EM radiation in the interaction region for each of the plurality of EM emitters, wherein i) a first set of two or more of the plurality of EM emitters are associated with a first matter particle of the plurality of matter particles; and ii) further EM emitters are associated with one or more different matter particles to the first matter particle; wherein the EM radiation generated by each of the EM emitters of the first set forms an intensity distribution covering a different portion of the interaction region to the EM distributions of: a) the other EM emitters within the first set; and b) the further EM emitters.

The method may form an electromagnetic, EM, trap (502) for holding a matter particle (504) for a quantum computation; the method comprising: I) outputting EM radiation (508a, 508b) from a plurality of emitters (506, 506a, 506b); II) focussing, with a focussing assembly (510) comprising one or more EM focussing elements (512), the output EM radiation into a interaction region (516) to form the EM trap (502); wherein the EM trap comprises overlapping intensity distributions (514a/b) of at least two (506a, 506b) of the plurality of emitters.

The method may further comprise modulating the intensity of the EM radiation forming the EM trap.

The method may further comprise directly modulating the plurality of emitters with electrical current to modulate the intensity of the EM radiation forming the EM trap.

The method may further comprise: trapping the matter particle using the method as described above; reducing the intensity of the EM radiation forming the EM trap to release the matter particle from the trap; inputting further EM radiation from a quantum computation EM source to the matter particle; re-trapping the matter particle using the method as described above.

There is further presented a system and/or a method as described in any of the aspects above wherein the quantum computation is a neutral atom quantum computation.

In a third aspect, there is presented, a system for forming a plurality of focussed electromagnetic, EM, radiation regions, for interacting with one or more matter particles; the matter particles act as qubits in a quantum computation; the system comprising: I) a source assembly comprising a plurality of emitters wherein each emitter is configured to generate and output EM radiation; the plurality of emitters comprising at least a first emitter and a second emitter; the source assembly configured to independently change the intensity of EM radiation output from the assembly from the first emitter and the second emitter; II) a focussing assembly comprising one or more EM focussing elements; the focussing assembly configured to focus EM radiation to form: a first focussed EM region, of the plurality of EM regions, using EM radiation output from the first emitter; a second focussed EM region, of the plurality of EM regions, using EM radiation output from the second emitter; the first EM region occupying a different portion of space to the second EM region; wherein: a) the source assembly is configured such that the first and second emitters are upon a unitary device; and/or, b) the EM regions form one or more traps for the matter particles.

The above system of the third aspect may be adapted according to any suitable way disclosed herein, including but not limited to any one or more of the following options and any of the above options for the first and second aspects. It is to be understood that any of the following options may be combined with any of the examples described elsewhere herein.

The system may be configured such that the EM regions overlap in space.

The system may be configured such that the overlapping EM regions form a composite EM trap to hold one or more of the matter particles.

The system may be configured such that the system further comprises an electronic controller configured to output: I) a first set of signals to the first and second emitters; and, II) a second set of signals to the first and second emitters; wherein; the first set of signals is configured to drive the said emitters to output EM radiation to form the composite trap for holding the said one or more matter particles in a first position in space; the second set of signals is configured to drive the said emitters to output EM radiation to form the composite trap for holding the said one or more matter particles in a second position in space that is different to the first position; the system configured to output the second set of signals after outputting the first set of signals.

The system may be configured such that: the first set of signals comprises a first signal for the first emitter and a first signal for the second emitter; the second set of signals comprises a second signal for the first emitter and a second signal for the second emitter; the first signal for the first emitter is configured to drive the first emitter to output EM radiation forming the first focussed EM region at a first intensity; the first signal for the second emitter is configured to drive the second emitter to output EM radiation forming the second focussed EM region at a second intensity; the second signal for the first emitter is configured to drive the first emitter to output EM radiation forming the first focussed EM region at a third intensity; the first signal for the second emitter is configured to drive the second emitter to output EM radiation forming the second focussed EM region at a fourth intensity; the first intensity is greater than the third intensity; the fourth intensity is greater than the second intensity.

The system may be configured such that: the first set of signals forms a first composite trap at a first time; the second set of signals forms a second composite trap at a second time after the first time; the first and second composite traps at least partially overlapping in space.

The system may be configured such that the EM radiation output from the said emitters is for controlling at least one qubit state transition of the quantum computation.

The system may be configured such that the system comprises a set of one or more further emitters for controlling at least one qubit state transition of the quantum computation. The EM radiation for controlling qubit state transitions may have a wavelength of 420, 780 or 1013 nm for example.

The system may be configured such that the EM radiation of at least one of the first emitter or second emitter being configured to prevent an atomic transition of a matter particle arising from the one or more further emitters. For example, the EM radiation may have a wavelength of 850 nm.

The system may be configured such that the EM radiation of the first and/or second emitter comprises an off-resonance wavelength of the qubit state transition.

The system may be configured such that the one or more further emitters comprises a different wavelength than at least one of the first and second emitters.

Brief description of the figures

Examples will now be described in detail with reference to the accompanying drawings in which:

Figure 1 shows a schematic example of the first aspect described herein;

Figure 2A shows a schematic for a set-up of the quantum computing system;

Figure 2B-2C show a three-dimensional schematic of an example set up of the system.

Figures 3A-3C show further examples of the setup of the system;

Figures 4A-4B show additional examples of the setup of the system;

Figure 5a shows a schematic example of another aspect of the system described herein;

Figure 5b shows trap intensity profiles of figure 5a;

Figure 5c shows a schematic of an example of a source assembly;

Figure 5d shows a further schematic example of the second aspect described herein;

Figure 6 shows an example of using four EM spots to trap a matter particle;

Figure 7 shows an example of the second aspect;

Figure 8 shows another example of the second aspect;

Figures 9a-c shows the use of different EM distributions in a trapping region to move a matter particle;

Figure 10 shows an example of a focussing assembly of the system.

Detailed description

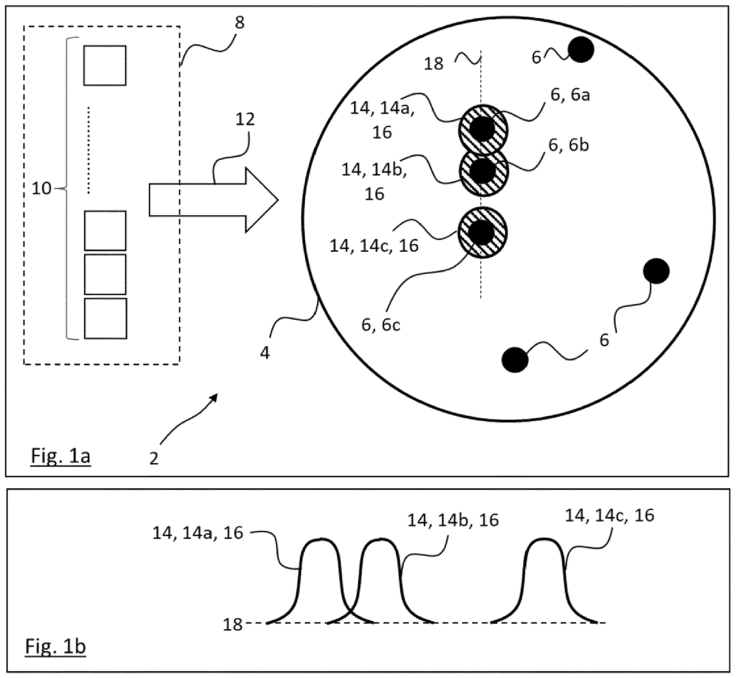

There is presented in a first aspect a system for use in a quantum computation. Figure 1a shows an example of such a system 2. The absolute size of components and relative positions shown in the figure are not representative of real implementations of a system 2. The system 2 comprises a chamber 4 for accommodating a plurality of spatially separated matter particles 6 for use as qubits in the quantum computation. The system 2 further comprises a source assembly 8 comprising a plurality of surface-emitting electromagnetic, EM, sources 10 configured to output EM radiation 12. The system 2 is configured to form a plurality of regions 14 of the EM radiation in the chamber 4. At least two 16 of the plurality of regions 14 are for interacting with at least one spatially separated matter particle (6). The at least two regions may comprise a first region and a second region wherein the first region and second region may act jointly on one or more matter particles, or each of the first or second region may act upon a different matter particle. The system may be used for trapping the matter particles or for controlling qubit state transitions, there may be other uses of the EM radiation interacting with the matter particles.

Figure 1a shows a schematic example where three matter particles 6a-c are trapped by three EM regions 14a-c respectively along a plane 18. Figure 1b shows intensity distributions of the three EM distributions 14a-14c along the plane 18 wherein distribution 14a overlaps with distribution 14b. Distribution 14c does not overlap with distribution 14a or 14b. The EM distributions shown in the figures are merely representative and are not accurate representations of the intensity distribution of the EM radiation. A non-limiting example of an intensity distribution is a Gaussian distribution.

The system has a number of advantages including but not limited to the following. Having a plurality of individual light sources may allow for arbitrary geometrical patterns of EM regions 14 generated along the plane 18, enabling an irregular pattern of trapped matter particles 6. In some examples the individual light sources can be individually addressed and thus allowing the system to controllably provide different trapping patterns by modulating the intensity of output light (from at least some of the sources) reaching the plane 18. This can be achieved with a high density of individual EM sources 10 or by manipulating each radiation beam 12. As a non-limiting example, using surface-emitting electromagnetic sources, such as a VCSEL array, may allow for a high density of individual EM sources, resulting in a compact system.

In some examples the system may be configured to have multiple EM sources (such as VCSELs) interacting with each matter particle, such as for trapping the particle. For example, in figure 1a distributions 14a-c may represent different EM regions for three matter particles 6, or two or more EM regions may combine to form a trap for a single matter particle. Combining the EM output of more than one emitter has the advantage of increasing the optical power of an EM region.

In some examples different EM distributions may be turned on/off. For example, in one quantum computation a matter particle, such as an atom, may be required to be in a position represented by region 14a whilst in a subsequent computation another, or the same, the matter particle may be required to be in a nearby position represented by region 14b. The EM sources may be directly or externally modulated to create the regions as needed. Because the system comprises EM sources which may be formed close to each other, the system may provide for several options of trap positions within a region. This can be important in quantum computations that rely upon matter particle distance, for example when using Rydberg-based entanglement. The system may be adapted to include other components to help form the EM distributions of the regions 14a/b/c. These other components may be in addition or replacement of the components shown in figure 1a. For example, a Spatial Light Modulator (SLM) may be used to help to controllably form the EM regions and determine their absolute and/or relative positions in space, for example along the plane 18, or one or more other planes not shown. An SLM may be any form and use any suitable technology, including but not limited to an acousto-optic deflector or arrays of micro-electromechanical systems (MEMS). The SLM may receive one or more electrical control signals from an electronic controller, and (using these control signals) controllably position each EM 'spot' 14 about the plane 18. An SLM may be positioned in between the plurality of surface-emitting electromagnetic, EM, sources 10 and the chamber 4. The SLM may be configured to receive EM radiation from the sources 10 and controllably output and direct the EM radiation to desired positions for interacting with the matter particles 6. The SLM may output its EM radiation into at least a portion of a focussing assembly. The EM radiation may be transported as optical beams. The SLM may receive EM radiation, such as optical beams, from at least a portion of a focussing assembly. Examples of focussing assemblies are discussed elsewhere herein.

Furthermore, the use of EM regions as traps that have a high modulation rate (i.e. speed of turning on/off) may be used to trap a matter particle when the trap is turned on, then release the trap for a short period of time by reducing the intensity to zero, negligible or a non-trapping intensity, then re-initialising the trap to hold the matter particle again before it randomly moves away from the trap. During the time the trap is 'off' the matter particle may be operated on by another stimuli such as a further laser that performs operations on the matter particles. Such operations may be quantum computing operations. A fast EM source modulation allows for this process to occur without the matter particle escaping the trapping region.

The system may be adapted according to any suitable way disclosed herein, including but not limited to any one or more of the following options. It is to be understood that any of the following options may be combined with any of the examples described elsewhere herein.

Matter particles

The embodiments herein may form part of a quantum computation system. The quantum computation may be an analogue computation or a digital computation. An example of an analogue quantum computation is one that involves arranging and electromagnetically operating on the qubits in accordance with a Hamiltonian. An example of a gated computation is one that involves arranging and electromagnetically operating on the qubits in accordance with a quantum circuit comprising one or more quantum gates such as, but not limited to, a CNOT gate.

EM radiation may be used to interact with matter particles for different reasons in quantum computing, including, but not limited to any one or more of: optical tweezers and other trapping schemes; physically manipulating the matter particles from one spatial position to another spatial position; exciting the matter particles between different energy states. Different energy states transitions may be any of, but not limited to: energy states representing a |0> and |1> quantum computation state; between energy states that facilitate qubit interaction such as a transition to a Rydberg energy state. It is to be understood that the EM radiation output from the EM sources may be one of a plurality of EM radiation sources used to transition a matter particle from a first to a second energy state, for example, the transition between the first and second energy state may require absorption of a photon from an EM radiation source and another source having the same or different central wavelength. For such a multiple photon transition, the wavelength of any one of the sources may be detuned from any of the resonant transitions of the matter particle.

The system may form part of a quantum computer system. The quantum computation may be a Neutral atom computation wherein the system forms part of a neutral atom quantum computer system, wherein the matter particles in the chamber are neutral atoms. Alternatively, in another example, the matter particles may be ions for an ion-based quantum computation.

As discussed, the matter particles may be atoms. The matter particles may be of the group 1 elements of the periodic table, or an alkali metal for example Caesium (Cs) or Rubidium (Rb). Other elements may be used such as, but not limited to alkaline earth metals (or group 2) such as Strontium (Sr), or other metals such as Ytterbium (Yb). Preferable matter particles are atoms of Caesium or Rubidium.

The matter particles may be neutral atoms or ions. Trapped ion quantum computing is known to be performed using optical tweezers as discussed in 'Trapped Ion Quantum Computing using Optical Tweezers and the Magnus Effect' by M. Mazzanti et al., 11 Jan 2023, arXiv:2301.04668v1.

The matter particles may exist in a gaseous state in the chamber. The environment inside the chamber, at least in terms of its temperature and vacuum state, may be set-up with suitable chamber environment equipment to allow for the matter particles to move freely or relative freely with respect to each other. The temperature and pressure of the chamber may be controlled. Chamber environment equipment may include any one or more of, but not limited to, one or more vacuum pumps to evacuate unwanted matter from the chamber. The vacuum chamber may be evacuated of matter to an extent that any unwanted (or unintended) particles in the space in the chamber do not affect any processes being carried on there. The chamber may be hermetically sealable. The chamber may comprise one or more at least partially transparent windows for allowing EM radiation to propagate into/out-of the chamber.

Source assembly

The plurality of EM sources may be referred to, for brevity, as 'emitters'. In the examples herein the term 'emitters' may be used for surface-emitting EM sources or other EM sources. References to 'light' in the examples herein may refer to any EM radiation usable with the examples herein. The EM sources described are typically non-organic, preferably semiconductor based in that the active material generating the EM radiation through electronic transitions comprises one or more semiconductors. Other non-semiconductor EM sources are also usable such as organic laser diodes.

Edge-emitting EM sources such as edge emitting lasers output EM radiation parallel to the wafer surface of the semiconductor chip wherein such radiation is reflected or coupled out at a cleaved edge. Edge-emitting lasers can be constructed in dense arrays for use with the present system. Surface-emitting sources such as lasers are where the light propagates in the direction perpendicular to the semiconductor wafer surface.

Surface emitting sources may be referred to as vertical emitting EM sources. The surface emitting sources may generate EM radiation via electro-luminance or stimulated emission. The vertical EM emitting sources may be any of, but not limited to: vertical cavity surface emitting lasers (VCSELS) and vertical light emitting diodes (VLED), otherwise known as Surface emitting LEDs.

Using surface-emitting electromagnetic sources, such as VCSELs, may allow for a high density of individual EM sources. The use of VCSELS enables the present system to be compact compared to the prior art. Where VCSELs are used, VCSELs are easily manufacturable in large quantities, allowing a significant reduction of the cost per device. A large array of VCSELs may be more technically achievable than large arrays of prior art trapping EM sources. Surface emitting EM sources may be formed with small pitch dimensions between adjacent EM sources, for example 250 micrometre centre-centre pitch or smaller. This allows for a large amount of EM sources to be within a small footprint. Such surface emitting sources such as VCSELs have fast refresh rates (high modulation bandwidths), for example 10MHz-10GHz, preferably 10 MHz-100MHz, thus in turn allowing for fast refresh rates of different geometrical patterns of traps for trapping matter particles. Such sources may be modulated with good optical power efficiency.

Surface-emitting EM sources can typically be fabricated in bulk in a layered arrangement on a planar substrate such as a wafer. Thus, large 1D or 2D arrays can be formed in the same or similar processing steps. Such surface emitting sources output light in a direction that is out of plane from the substrate (and its layers) hence outwardly away from, the plane of the substrate. Typically, this light is output perpendicular from the plane of the substrate. Matter particles such as atoms or ions are often required to be arranged in 1D or 2D arrays for quantum computations. Because of this EM radiation directionality of the light sources of the above system, the sources may be fabricated in a spatial arrangement that outputs light with a set of light beams with directions that corresponds to the required spatial arrangement of the EM radiation.

For purposes of describing the system, surface-emitting EM sources may be referred to throughout simply as the 'EM sources', the 'sources' or the 'emitters'.

In an example, an array of EM sources may comprise a group or set of two or more sources that are controlled together. The EM sources may be controlled by an electronic controller which outputs electrical signals that drive the sources to output EM radiation. The group or set of two or more sources may be controlled by a set of electrical signals, for example there may be one signal for each source in the group. In one example, the group of sources or emitters may be formed from four EM sources, which are neighbouring within the array of EM sources. The group of emitters may be formed from 2 to 16 EM sources. Other ranges of numbers of EM sources are permissible. When the control signals cause all of the group of emitters to be outputting EM radiation simultaneously, the group of emitters can be said to form a 'super emitter', for which the power output is equal to the sum of the power output of the individual emitters in the group of emitters. An array of EM sources may contain one or more groups or sets of emitters. An array of EM sources may contain one or more 'super emitters'. An array of EM sources configured in this way can be described as operating in a multi aperture mode. When the EM radiation output by all the emitters in the set of emitters has the same wavelength, the array has a single mode operation. An array of EM sources may comprise a multimode source, such as a multimode VCSEL with multiple transverse modes, of the same polarisation, supported by the cavity. A mask, filter or other apertured component may be used with the multimode source to provide multiple apertures that receive light from the multi-mode source and transmit light through each aperture. Each aperture is separated from another aperture by a non-transmissive portion of the mask. For example, a multi-aperture mask may be positioned adjacent or proximate to the output facet of the multimode EM source and pass multiple spatially separate output beams through each aperture. In another example a similar multi-aperture mask may be adjacent to multiple single mode sources (single mode here being a single supported transverse mode of the same polarisation, wherein each aperture in the mask receives light from a different one of the plurality of single mode sources.

A non-limiting example of a VCSEL device is as follows. A first mirror region having one or more reflecting elements resides upon a platform such as a substrate. Intermediate layers may reside in between a surface of the substrate and the first mirror region. The reflecting elements may be, planar mirrors and/or Bragg gratings. At least a first reflecting element also acts as a first electrical contact (for example a negative contact). In an alternative, this electrical contact may be made by another layer of the device, for example a layer between the substrate and the first mirror region or a feature on another part of the substrate. An active region formed of one or more layers of active material is disposed upon the first mirror region such that the first mirror region is disposed in between the substrate and active region. The active region comprises material comprising a band gap suitable for the wavelength of operation required by the VCSEL. The active region may be configured and/or otherwise comprise a physical structure to enable the generation of a population inversion via the injection of electrical current through the active region, for example, the active region may comprise one or more quantum wells. A second mirror region similar to the first mirror region is disposed upon the active region such that the active region is disposed between the first and second mirror regions. Similar to the first mirror region, at least one reflecting element of the second mirror regions acts as an electrical contact (for example a positive contact). The second mirror region is less than 100% reflective such that EM radiation generated in the active region may exit from the VCSEL in a direction directly away from the substrate and active region. The contacts or the first and second mirrors are connected to an electrical current or voltage source configured to drive current through the layered structure of the VCSEL. The first mirror region, active region and second mirror region act as an EM cavity wherein photons generated by the active region propagate back and forth between the mirror regions constructively building up an EM wave, via stimulated emission, of a particular set of one or more wavelengths defined by the bandgap and cavity optical path length.

A non-limiting example of a VLED device is as follows. The VLED may have a similar layered structure as described above for the VCSEL except that: the first mirror region is removed or replaced by a p or n-type material layer; the second mirror region is removed or replaced by a material layer of the other of the p or n-type; electrodes that, do not act as EM wave reflecting elements are used to introduce electrical current through the active region. A mirror may be used in between the substrate and active region to reflect errant photons back into the intended direction of light emission. The electro-luminance from the active region is output from the VLED in a direction directly away from the substrate and active region. Other non-limiting examples of VLEDs are provided in US7615789B2.

It is to be understood that herein, references made to VCSELs in examples of the systems and methods may equally be other surface emitting sources such as VLEDs or use of photonic integrated circuits (PICs) to direct surface emitting light.

The VCSELs may be formed as a single unitary device, for example, on a chip. Multiple such unitary devices may be used. The VCSELS may have a particular spatial arrangement with each other. This arrangement may include one or more 1D or 2D arrays that are regularly or irregularly spaced in one or two directions about a plane parallel to the plane of the substrate of the unitary device. For example, the unitary device may comprise a single 2D array of VCSELS periodically spaced in each of the 2D directions. The first direction being perpendicular to the second direction. As another example, the unitary device may comprise multiple 2D array of VCSELS. The arrays are periodically spaced in each of the 2 perpendicular directions wherein each array is spaced apart from an adjacent array by a distance greater than the intra-array VCSEL spacing along the same direction as the respective inter-array spacing. Thus, different groups or clusters of VCSELs may be formed on the same device. The groups may have any pattern. The device may have a set of contacts for individually addressing each VCSEL and/or each group. One or more contacts may act as a common contact for one or more group or all of the VCSELs.

A non-limiting example of an edge-emitting device is as follows. The device assumes a laser, although other edge emitting sources are possible. A laser bar may be formed, which is defined as an array of side-by-side edge-emitting lasers integrated into a single chip. For example, there may be 10 to 50 edge-emitting lasers together. The lasers may be formed in a one-dimensional arrangement. These laser bars may be further mounted into stacks, with each bar independently powered. The stack of edge-emitting lasers may form a dense two-dimensional array of lasers. The edge emitting lasers are typically structures whereby first and second EM reflecting elements are spaced apart from each other to form a cavity in between, whereby an active region supporting a population inversion (given an energy input) resides between the reflecting elements. The cavity extends parallel to the substrate upon which the lasers are formed. The reflecting elements are typically located at the edges of the chip and typically comprise a high reflectivity (90+%) coating chip edge. Typically, one of the reflecting elements has a lower reflectivity than the other to allow laser light in the cavity to escape the cavity. The other of the reflecting elements typically comprises a high reflectivity of 99%+ to ensure most, or all of the EM radiation is reflected back into the cavity. Edge emitting devices typically have an edge defined by a cleave line or etch that may be shared among the lasers of the same device. In such circumstances, multiple lasers are formed on a single device and may be termed 'unitary' with respect to being part of the same device.

The source assembly may comprise further components. The further components may include components for delivering electrical power and/or electrical signals to the plurality of emitters and/or other components of the source assembly. The electrical signals may be used to provide electrical current for driving one or more of the plurality of emitters to emit EM radiation. The electrical signals may be used to drive other components of the source assembly such as modulators for amplitude and/or phase modulating EM radiation generated from one or more of the plurality of emitters. An example of a modulator is an electro absorption modulator or a Mach-Zehnder interferometer. EM radiation output from the emitters may be input directly into a modulator by being directly butt-coupled or via free space between the emitter and modulator. The modulator may be mechanical or otherwise physically coupled to one or more emitters, for example by being monolithically or hybrid integrated with the emitter(s). When monolithically integrated, the modulators and emitters may be a unitary in nature. Additionally, or alternatively one or more further components may be optically linked and optionally physically coupled to the modulators and emitters. Such further components may be any one or more of: fibre optic components; integrated optic components; bulk optic components and non-linear optic components. The further components may include one or more waveguides for receiving light from an emitter and outputting light to a modulator. The waveguide may be a passive EM component and may comprise an optical fibre and /or an integrated optic waveguide. The further components may comprise, but are not limited to: mirrors, lenses, polarisation controllers, EM radiation splitters.

EM radiation may be any wavelength but is preferably in the following ranges: the visible (380-750nm) or near infrared (750nm-2500nm). Preferably the wavelength is between 700-1000nm, or preferably 800-900nm. EM radiation may be continuous wave or pulsed and/or have a time dependent intensity profile. The polarisation of the EM radiation may be linear, circular, or elliptical. The polarisation of the different EM emitters may be the same or different. EM radiation may comprise a wavelength, hence frequency, that is non-resonant or 'off resonance' from the atomic transitions of the matter particles, for example not being resonant with the atomic transitions, i.e., the energy required to transition a matter particle between discrete energy levels. Exposing matter particles to non-resonant EM radiation shifts the energy levels of the matter particles, the direction of the shifted energy level depending on if the wavelength of the EM radiation is above or below the transition wavelength. These energy levels are typically those that define different atomic states that represent qubit states or states that the matter particles transition between as part of a quantum computation process. Such EM wavelengths may be used, for example for trapping, or anti-addressing. In other examples the radiation may be resonant with an atomic energy state transition.

Focussing assembly

The system may comprise apparatus for delivering the EM radiation into the chamber and forming the EM radiation into the regions. The apparatus may be termed elsewhere herein as a 'focussing assembly' or 'imaging apparatus' or 'imaging system'.

The imaging system may be configured to image the emitters onto an imaging region in the chamber. The emitters may be associated with an object plane. Each of the plurality of emitters may be aligned upon a common object plane. The imaging system may image the emitters onto an image plane wherein the object and image plane are conjugate planes. The imaging system projects the image of the EM emitters onto the image plane with a reduction in magnification. The reduction in magnification of the emitters may be diffraction limited to an Airy disk proportional to $\sim(1.22 \times \lambda)/D$ wherein D is the aperture of the EM imaging system and X is the wavelength of the light.

The apparatus for delivering the EM radiation and forming the regions of EM radiation may comprise one or more components for guiding and/or focussing and/or collimating the EM radiation. Preferably a plurality of components are used to perform this function. The plurality of components may include, but is not limited to, any one or more: lenses and/or mirrors and/or aperture stops for forming the EM regions. These components may be integrated-optic or, preferably, bulk-optic components. A collection of bulk optic components may be used in the apparatus to receive light from the EM sources.

Examples of systems

The positions and configurations of the elements in the figures presented are not supposed to imply any real-world size, positioning or configuration of features, but merely to illustrate an example of the key functioning components of the systems discussed herein. Features and components of the embodiments presented herein may be used interchangeably within other embodiments of the system.

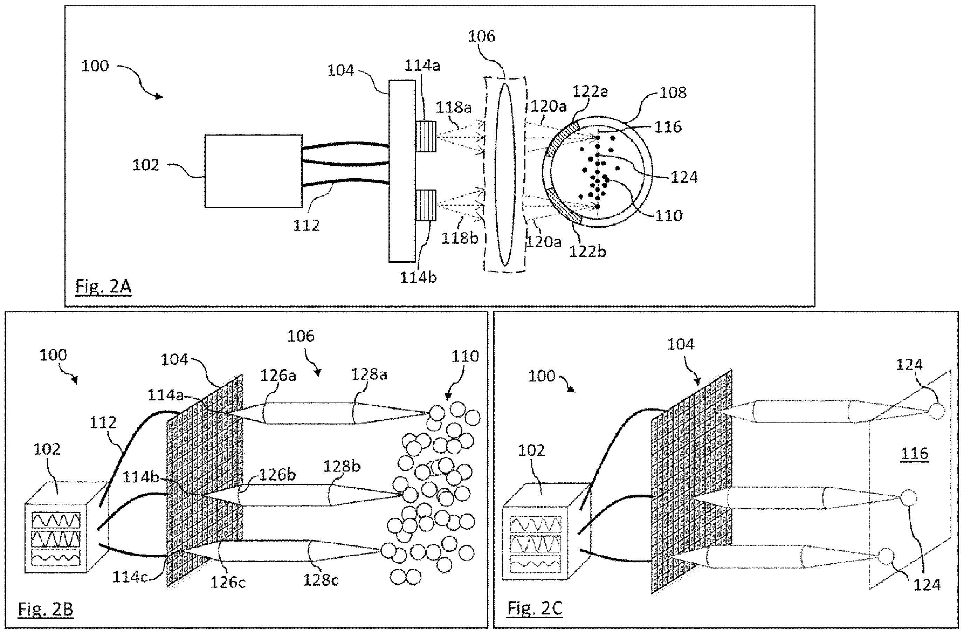

A non-limiting example of a system 100 for use in quantum computation is shown in figure 2A. The system 100 comprises an electrical power unit 102, a source assembly 104, a focussing assembly 106 and a chamber 108. In this embodiment, the chamber 108 is a vacuum chamber which accommodates a plurality of spatially separated matter particles 110 for use as qubits in the quantum computation. The particles 110 are neutral atoms in a gaseous form. The neutral atoms may be for example Rubidium or Caesium.

The source assembly 104 comprises a plurality of EM sources configured to output EM radiation. The EM sources are arranged as a two-dimensional array of surface-emitting EM sources. The EM sources are vertical-cavity surface emitting lasers (VCSELs) 114. For clarity, only two VCSELs 114a and 114b are shown in figure 2A, not to scale. The array contains a large number of VCSELs 114, for example between 2000 and 3000 VCSELs 114. The array may however contain a smaller or greater number of VCSELs. The VCSEL array is formed as a single unitary device, for example, on a chip. An example of a chip would be a semiconductor chip. A semiconductor chip may be a silicon chip. Alternatively, the source assembly 104 may comprise two or more light emitting devices on separate components. The array of VCSELs may be compact in size with a small distance between the VCSELs 114. The pitch between VCSELs 114 in the array of VCSELs may be 50-1000 $\mu$m, preferably 100-500 $\mu$m, more preferably 250 $\mu$m. The VCSELs 114 generate EM radiation 118 via stimulated emission. The array of VCSELs delivers a plurality of coherent optical beams. The optical beams may also be referred to as optical channels. A wired electrical connection 112 from the electrical power supply 102 provides a plurality of separate control signals to the VCSEL array. The electrical input signals cause the VCSELs 114 to output EM radiation 118. The VCSELs 114 may emit EM radiation 118 at a central wavelength in the range of 815 - 940 nm. Preferably, the VCSELs 114 may emit EM radiation 118 at a central wavelength of 850 nm or 815nm. In this example the wavelength is 850 nm. The VCSELs may have a Full Width Half Maximum (FWHM) of 0.05-0.5 nm, preferably 0.1 nm, and a refresh frequency of up to 10 GHz. The refresh frequency may be in the range of 10 MHz to 100 MHz. Each VCSEL 114 may be addressed individually by the electrical power unit 102 using suitable control circuitry.

The focussing assembly 106 is represented in figure 2A by a lens inside a dashed box to indicate that the assembly may take many forms. The focussing assembly may comprise any of the assemblies described elsewhere in this document. The focussing assembly 106 may also be referred to as an 'imaging system' or 'imaging apparatus'. The output EM light 118 may be delivered by the focussing assembly 106 as a focused beam 120 into the chamber 108. The EM light may also be delivered to the chamber 108 as a collimated beam. The focused EM light 120 is used to trap individual atoms from the plurality of atoms 110. The traps may be formed by a region of EM radiation. The region may be three dimensional. The region of the EM radiation forming the traps being a region of focused light with minimum beam waist. The trapped atoms 124 form a 2D array on an atomic focal plane 116. The EM light 118 from an individual EM source may be focused to act on more than one atom simultaneously. The atoms 124 are trapped in an array of optical traps, such as optical tweezers. In other words, the focussing assembly 106 manipulates the EM light 118 of the VCSELs 114 into focused laser beams 120 used to trap one or more of the plurality of atoms 110 in optical traps. The trapped atoms 124 remain in the focal plane 114. The atoms 110, 124 are represented by not to scale circles in the figures merely to demonstrate the concept.

The above example system describes EM radiation used for trapping atoms. Alternatively, the EM radiation may be used to control a qubit state transition. All embodiments of systems disclosed herein which describe using EM radiation for trapping may alternatively be used to control qubit state transitions.

The chamber 108 contains a plurality of windows 122 which allow the focused EM light 120 to pass through into or out of the chamber 108. One or more imaging systems (not shown) may be used to focus the light, such as fluorescent light, output from the atoms for imaging the atomic plane 116. The imaging systems may comprise similar optical components as described for the example focussing assemblies.

The focussing assembly 106 comprises optical components between the source assembly 104 and the atomic focal plane 116. The focussing assembly 106 may be within or, preferably, external to the chamber 108. The focussing assembly 106 may comprise components both inside and outside of the chamber 108. The focussing assembly 106 may comprise high-numerical aperture optics to produce tightly focused laser beams 120. The optical components may comprise one or more lenses, apertures, mirrors or other apparatus. For instance, the focussing assembly may comprise a single convex lens. Examples of focussing assemblies described elsewhere may be used within the system 100.

The system 100 is configured to form a plurality of regions of EM radiation in the chamber 108 acting on the atomic plane 116. The regions may be three-dimensional. The regions may have a 0.5-5 $\mu$m diameter, preferably a 2 $\mu$m diameter. The regions may have a 0.1-10 $\mu$m pitch, preferably a 1 $\mu$m pitch, from centre to centre of the regions. The regions may overlap. The regions may be separated. Some regions may be separated and others may be overlapped. The number of VCSELs 114 in the array may be greater than the number of atoms 110 in the chamber. There may be a plurality of VCSELs able to interact with each atom. This leads to a freedom in the atom positioning when using the VCSELs to trap the atoms. The system 100 may use EM light manipulated into regions as described in other examples elsewhere herein.

Figures 2B and 2C demonstrate an example of the system 100 in which the focussing assembly 106 comprises individual lenses for each optical beam output from a VCSEL 114. Figures 2B and 2C are similar to figure 2A so that like numerals represent like features. The chamber 108 has been omitted from figures 2B and 2C for clarity.

Figure 2B shows a source assembly 104 comprising a plurality of VCSELs 114. For clarity, only three optical channels are shown, delivered from three individual VCSELs 114a, 114b and 114c. There may be an optical channel for each of the plurality of VCSELs 114 in the source assembly 104. The output of multiple VCSELs 114 may be combined into a single optical channel. The light emitted from a VCSEL 114 may be used to individually address an atom in the plurality of atoms 110. Each optical channel may be used to individually address an atom in the plurality of atoms 110. The EM light may act on more than one atom at a time. The EM light may be in the form of a laser beam. Each laser beam, or optical channel, is transported by dedicated optics. The focussing assembly 106 may comprise dedicated optics for each optical channel. The focussing assembly may comprise a first lens 126 and a second lens 128 for each optical channel. The divergent light 118 output from the VCSEL 114 is collimated by a first lens 126a-c, situated between the source assembly and the second lens 128a-c. The light is then transported as cross-sectionally-wide collimated light to the second lens 128a-c, situated between the first lens 126a-c and the plurality of atom 110, and then refocused by the second lens 128a-c onto one or more atoms from the plurality of atoms 110. The focussing assembly 106 may alter the shape of the light beams generated by the VCSEL sources 114 to create geometrical patterns which are not limited to the shape of the array of VCSELs.

Figure 2C is an evolution of figure 2B in which three matter particles 124 are trapped in the atomic plane 116. Each optical channel is optically coupled to a trapped atom 124. The remainder of the plurality of atoms 110 are free to move. The remainder of the plurality of atoms 110 may be evacuated from the chamber 108 or moved away from the atomic plane 116 using one or more actuators (not shown). For example, the excess matter particles may be removed by one or vacuum pump systems (not shown).

The electrical power unit 102 can be configured to modulate the driving current on each of the plurality of coherent light sources 114. For example, an acoustic-optical modulator (AOM) may be used to modulate the amplitude of an electrical signal. This integrated modulation enables the optical power output of each VCSEL 114 to be adjusted individually. The VCSELs 114 may be independently modulated to arbitrary values between their minimum and maximum intensity. For example, the output of the VCSELs can be varied on a continuous scale between the on and off states of the VCSEL 114. The modulation bandwidth or modulation frequency is high for VCSELs 114. In other words, the refresh rate at which the VCSELs 114 can be changed between the on and off states is rapid, as indicated by the modulation bandwidths listed elsewhere herein. The refresh rate is significantly increased compared to the prior art, such as spatial light modulators. Some quantum computing systems require the trapping light to be off whilst activating the atom via an alternative source. The trapping light is then turned on again after the operation on the atom is completed. The atom will only stay in place without the trapping light on it for a limited time, known as the decoherence time. If an atom moves from its trapped position and interacts with another entity, is the system decoheres, ending the quantum computation. It is therefore advantageous to achieve as many operations as possible before decoherence occurs. It is therefore also advantageous to enhance the speed at which the traps are turned on and off. This may reduce any delay between finishing the quantum operations on the atom and the trapping light turning on.

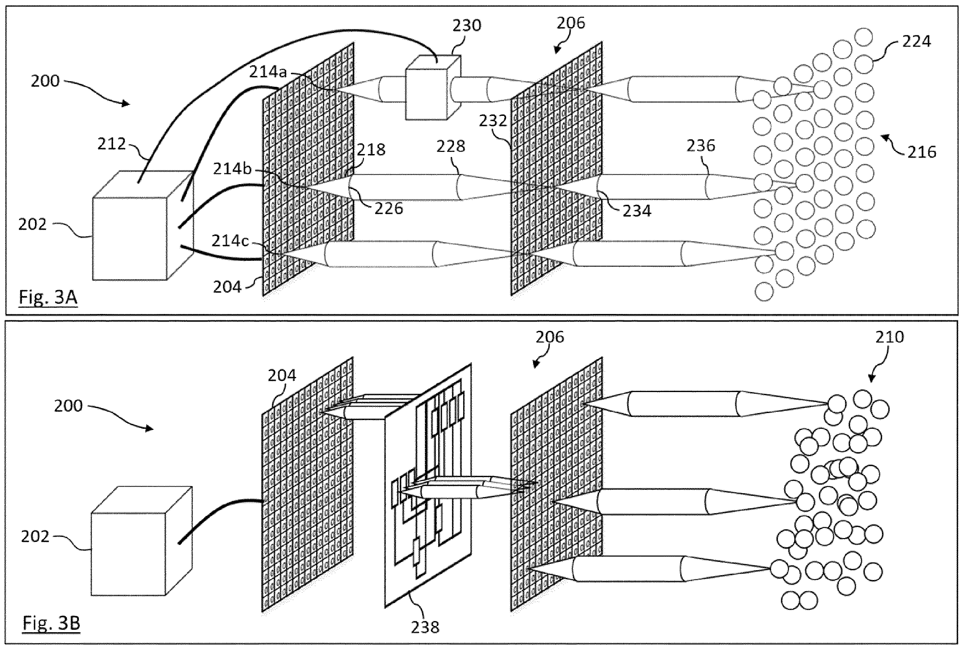

Figure 3A discloses another embodiment of a system for use in quantum computation. The system 200 comprises an electrical power unit 202 and a source assembly 204 similar to those in the system 100 disclosed in figures 2B and 2C, or as described in other examples disclosed elsewhere herein. A chamber which may encompass the matter particles has been omitted for clarity.

Figure 3A shows a plurality of atoms 224 trapped on an atomic plane 216. For clarity in the figure, only three optical channels are shown acting on three of the plurality of trapped atoms 224. There may be an optical channel acting on each atom 224 trapped on the atomic plane 216. The three optical channels initiate from three VCSELs 214a, 214b, and 214c. There may be an optical channel initiating from each individual VCSEL. The optical channels may be formed by one or more VCSELs from the source assembly 204. The EM radiation output from between 2 to 10 VCSELs may be combined into a single optical channel.

The focusing assembly 206 of system 200 comprises an intermediatory image plane 232. The focussing assembly 206 further comprises dedicated optics for each optical channel. The focussing assembly may comprise a first lens 226, a second lens 228, a third lens 234 and a fourth lens 236 for each optical channel. The EM light 218 output from a VCSEL 214 may be collimated by a first lens 226, situated between the source assembly 204 and the second lens 228, then focused by a second lens 228, situated between the first lens 226 and the intermediatory image plane 232, on to an intermediatory output plane 232. The light may be imaged on to the intermediatory output plane 232, which then acts as an object plane which the focussing system 206 images on to the focal plane 216. This may occur via third lens 234, situated between the intermediatory image plane 232 and the fourth lens 236, which collimates the light, and a fourth lens 236, situated between the third lens 234 and the atomic plane 216, which refocuses the light on the atomic plane 216. Examples of optical components used in focussing assemblies described elsewhere may be used within the system 200.

The system 200 may further comprise an external modulator 230, or bulk modulator. The modulator 230 may be powered by the electrical power unit 202 via a wired electrical connection 212. The modulator 230 may be within the source assembly 204, between the output of a VCSEL 214 and the focussing assembly 206. Alternatively, the modulator 230 may be within the focussing assembly 206. There may be an external modulator 230 acting on each optical channel. There may be an external modulator 230 for each EM source 214. Alternatively, the modulator 230 may act on a plurality of optical channels (not shown). The modulator 230 may be a plurality of electro-optical Mach-Zehnder Interferometers (MZI). In some examples, the system 200 may use optical components, such as mirrors to redirect light to the modulator 230 and further optical components to redirect light to the focussing apparatus 206 (not shown).

One or more modulators may be optically coupled to one or more of the emitters. Preferably a different modulator is optically coupled to each emitter such that each one of the plurality of modulators are associated with a different emitter. Preferably at least one, preferably a plurality, preferably all, of the modulators have their modulating function independently controllable.

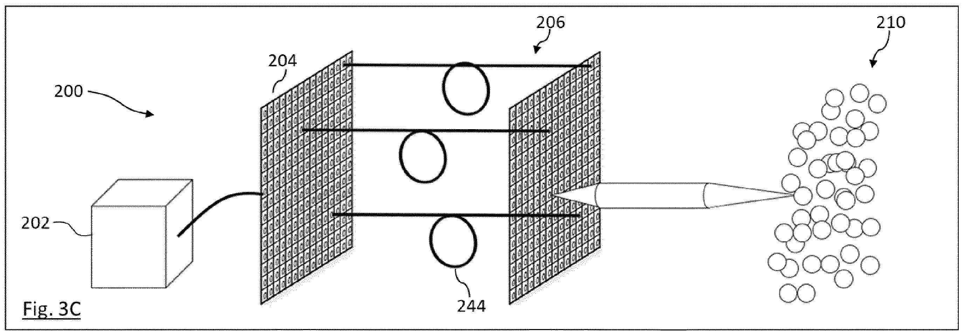

Figures 3B and C are similar to figure 3A so that like numerals represent like features. Figures 3B and C show alternative or additional systems for transporting EM light between the source assembly 204 and the focussing assembly 206, or within the focussing assembly 206, for the system 200. A combination of the features or components disclosed in Figures 3A, B and C may be used together.

Figure 3B shows an example of using a photonic integrated circuit 236 to manipulate or transport the EM light. Figure 3C shows an example of a system comprising optical fibres 244 to transport the EM light. The EM light may be output directly from the emitters, or from a modulator connected to an emitter, to an optical fibre 244. EM light may be transported from the emitters to a modulator via an optical fibre 244. A further optical fibre 244 may then transfer light to an intermediatory output plane, as discussed above. Alternatively, a photonic integrated circuit 236 or optical fibres 244 may be used to process or direct light towards the matter particles 210/224 without an intermediatory output plane. Photonic integrated circuits (PICs) may also be used to output surface emitting light by directing in plane light beams to surface normal directions. The EM light may on-resonance or off-resonance for qubit state transitions.

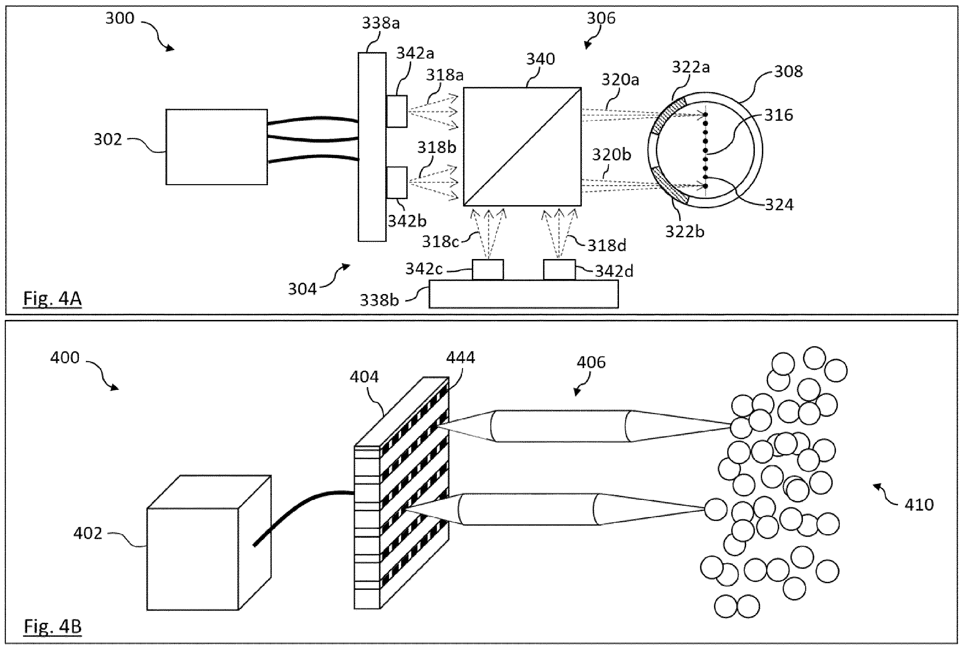

Figure 4A shows an alternative embodiment of a quantum computing system 300. The system 300 comprises an electrical power unit 302 similar to that described previously. The system 300 further comprises a source assembly 304, a focusing assembly 306 and a chamber 308. Features of other examples disclosed elsewhere herein may be used in combination with system 300, and vice versa.

The source assembly 304 comprises two or more separate devices 338 comprising surface-emitting EM sources. The two or more devices 338 may comprise a plurality of vertical light emitting diodes (VLEDs) 342, otherwise known as surface emitting LEDs. There may be one or more VLED 342 on each source device 338. Two VLEDs are shown on each device 338 in figure 4 as an example. Each VLED 342 may be manufactured separately as independent components. The pitch between the VLEDs may be any pitch such as 10 micrometres or more, 30 micrometers or 50 micrometres or more, for example 50-250 micrometres or any of the previous optional minimum ranges upto any of: 1000 micrometres, 500 micrometres, 250 micrometres. The VLEDs may output EM radiation with a wavelength of 815 nm. The EM radiation may be modulated by integrated or bulk modulators (not shown), as described in examples elsewhere.

The EM radiation 318 output from the two or more separate devices 338a/b is directed towards a polarising beam splitter (PBS) or beam splitter 340. The beam splitter 340 may combine the EM radiation 318 and redirect it as needed. The beam splitter 340 may be considered part of the source assembly 304 or the focussing assembly 306. The light 320 output from the beam splitter 340 is focused by the focussing assembly 306 on to a plane 316 within the chamber 308. Focussing assemblies described elsewhere may be used within the system 300. The focusing assembly 306 is configured to form a plurality of regions of EM radiation in the chamber 308. The regions may be large, for example 5-50 $\mu$m. The regions may be completely separated, with no overlap.

The system 300 may be used for optically exciting the spatially separated matter particles 324 within the chamber 308. The matter particles 324 may be ions. The EM light may address an individual ion 324 on the focal plane 316 which has been trapped by another light source. The ions may be trapped using another system, such as with a spatial light modulator (SLM). Addressing an ion 324 may comprise operating on, or optically exciting, an ion 324 to cause the ion 324 to fluoresce. The EM sources 342 may be used to control Rydberg transitions. The same system may be used for addressing and for trapping the matter particles 324.

Figure 4B shows a further alternative example of part of a quantum computation system 400 in which the source assembly 404 comprises a plurality of edge emitting lasers 444. The system 400 further comprises an electrical power unit 402 and a focusing assembly 406 which may be as described in other examples disclosed elsewhere herein. The plurality of edge emitters 444 may be combined into a laser bar, in which multiple edge emitting lasers are manufactured side-by-side in a single chip. The laser bars may then be stacked forming a 2D array of edge-emitting lasers 444 as shown in figure 4B. The bars may be spatially separated in the stacking direction for efficient heat dissipation. Each laser bar may be independently powered. Alternatively, each laser may be independently powered. The output of each laser may be independently modulated. The EM light emitted from the lasers 444 may be independently manipulated to act on the matter particles 410 by a focusing assembly 406. Alternatively, the focussing assembly 406 may combine the output EM light from multiple lasers to, for example, increase the power of the output beam. Edge emitters 444 may have a higher output power than surface-emitters, but low yield factors are obstacles to manufacturing stacks of edge emitters 444.

The systems described above may be used for one or more quantum computations, but may also be used for other purposes such as trapping atoms or ions in a chamber for experimentation that does not form part of a quantum computation.

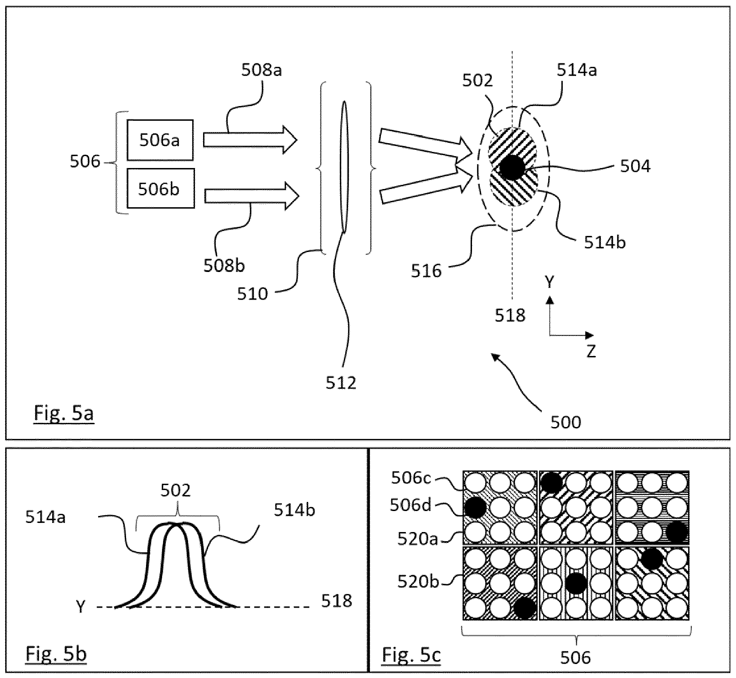

There is further presented a system for forming electromagnetic, EM, radiation for interacting with a plurality of matter particles in an interaction region, the matter particles acting as qubits in a quantum computation. Figure 5a shows a conceptual example of the system 500 wherein sizes and dimension do not reflect real components and features of the system 500.

The system 500 comprises a plurality of emitters 506. Each emitter 506a/b is configured to output EM radiation 508a, 508b. The system also comprises a focussing assembly 510 comprising one or more EM focussing elements 512. The EM radiation may be transported as optical beams. The focussing assembly 510 is configured to focus the output EM radiation 508a/b into an interaction region 516 to form, for example, EM traps 502 for holding the matter particles 504. The plurality of emitters 506 are configured to form intensity distributions 514a/b, or radiation spots, in the interaction region 516. The intensity distributions 514a/b of at least two of the plurality of emitters 506a/b may overlap. Figure 5b shows a conceptual drawing of the EM intensity profiles 514a/b of figure 5a along the plane 518. The plane 518 intersects and runs through the interaction region and may be an image plane of the focussing assembly 510.

The interaction with matter particles may comprise, but is not limited to, trapping the matter particles, such as in an atomic register for use in a neutral atom quantum computation, or controlling the qubit state transitions for the quantum computation. The interaction region may be a three-dimensional portion of space.

In an embodiment of the system 500, the plurality of emitters 506 may be configured as shown in figure 5c. Figure 5c shows a schematic of a part of an array of emitters 506. The array contains a large number of individual emitters 506c, 506d, such as surface emitting EM sources, such as VCSELs, for example between 2000 and 3000 emitters. The array may however contain a smaller or greater number of emitters. The number of emitters in the array 506 may be orders of magnitude greater than the number of matter particles 504 in the interaction region 516. The array of emitters may be located upon a common device. The emitters 506 are arranged in the array in a regular pattern, such as a grid-like pattern. Each of the emitters 506 outputs EM radiation which forms an intensity distribution, or radiation spot, within the interaction region 516. The intensity distribution associated with each emitter covers a different portion of the interaction region to the intensity distributions of the other emitters. The pattern formed by the positions of the intensity distributions in the interaction region is similar to the arrangement of the emitters. The radiation spots may form a regular pattern, such as a grid-like pattern.

The plurality of emitters 506 may be divided into groups or sets of emitters 520, each set comprising multiple EM emitters 506c, 506d. A set 520a, 520b may comprise two or more emitters 506a, 506b, which are neighbouring within the array of emitters. Optionally, a set may be between 2-29 emitters; for example 25 emitters. A set of emitters may form radiation spots 514 in a subregion of the interaction region 516. The plurality of subregions of the interaction region may be non-overlapping. Each set of emitters may be associated with the subregion in which it forms EM radiation spots. Each subregion of the interaction region may be associated with a different matter particle. Each set of emitters 520 may be associated a different matter particle. The positions of the EM distributions associated with a set of emitters may have a similar arrangement to the emitters within the set of emitters, such as a regular pattern.

The system may be configured to receive a plurality of input electrical signals. The signals may determine the output of radiation from each of the EM emitters. Each emitter within a set of emitters may be controlled by a separate set of electrical signals.

Each set of emitters may be configured so that only one emitter within the set of emitters is outputting EM radiation (activated) at a time. There may be only one radiation spot within each subregion of the interaction region. In figure 5c, within set 520a the activated emitter 506d is represented by a black circle, emitters that are not emitting radiation 506c are represented by white circles. The system may be configured to activate the emitter which forms a radiation spot which corresponds best to the position of the matter particle within the subregion. The system may be configured to activate the emitter which forms a radiation sport which corresponds best to the desired position of the matter particle within the subregion. The activated emitters may form an irregular pattern of EM distributions within the interaction region.

The system is advantageous when the matter particle is not central in the subregion of the interaction region, as there are many choices for positions of radiation spots within the set of emitters. The system can therefore accommodate atomic registers in the interaction region that have a non-regular shape, i.e., when the matter particles are not arranged in a grid-like regular pattern matching the pattern of the emitters. Prior art systems may require use of an additional spatial light modulator (SLM) to remap an arbitrarily shaped atomic register to a regular pattern, and use of this additional SLM degrades the overall performance of the system. Therefore, the system 500 enables better performance for a system for interacting with matter particles which act as qubits in a quantum computation.

In an embodiment of the system 500, having radiation spots from multiple EM sources allows the system to create traps of different characteristics for holding matter particles. Characteristics may be, for example, a particular spatial intensity distribution or a wavelength distribution. Emitters may emit EM radiation at substantially the same wavelength or different wavelengths. The intensity distributions of different emitters may directly overlap such that the spatial position of the peak of a first EM distribution is the same as the peak of a second EM distribution. This may provide a trap with a stronger potential (at least in the centre of the trap) than a trap using EM radiation from a single emitter. In another example, the spatial position of the peak of a first EM distribution may be spatially offset in the trapping region from the peak of a second EM distribution. This may provide a trap with a larger spatial extent, at least in one spatial dimension, than a trap just using a single EM distribution. A larger spatial extent allows the system to capture matter particles more easily than a trap formed from only a single EM distribution from a single emitter.

Figure 5a shows two emitters 506a/b; a single matter particle 504, a single focussing assembly 510; however other examples may include any one or more of, but not limited to: more than two emitters 506; more than two emitters forming a trap 502; multiple traps; multiple matter particles; multiple focussing assemblies.

Features and components of other examples may be used with the system 500 of this example and vice versa. Such components may include EM emitters, EM emitter platforms; focussing assemblies, electrical control devices for operating the emitters and other components such as modulators; equipment for accommodating and/or providing an environment for the matter particles/s.

The system 500 may form part of a quantum computation system, such as but not limited to a neutral atom quantum computation system or an ion-trap computation system. Neutral atoms may be, but are not limited to: Rubidium, Caesium, Ytterbium. The matter particles may be accommodated within an environment. The environment may be any of pressure controlled, temperature controlled. The environment, in particular the interaction region 516, may be substantially evacuated of free matter particles other than matter particles used for quantum computation. The environment may be located within a chamber. The chamber may comprise one or more at least partially transparent windows for allowing EM radiation to propagate into/out-of the chamber. Such EM radiation may be any of: EM radiation for trapping the matter particle/s; EM radiation to perform other functions in the quantum computation. The chamber may be hermetically sealable. One or more pieces of chamber environment control equipment, such as pumps and electronic controllers, may be used to attain and maintain a desired environmental for the matter particles.

The matter particle may be, for example a neutral atom or ion. The quantum computation may be an analogue computation or a digital computation. The trap 'holds' the matter particle insofar that without any further external stimuli affecting the trapped matter particle, the trap will confine the matter particle to the spatial extent of the trap. Emitters may be any emitter including surface emitter EM sources such as but not limited to VCSELS or VLEDs, or other sources such as edge-emitting lasers such as distributed feedback lasers (DFBs). EM radiation may be centred any wavelength but is preferably in any of the following ranges: the visible (380-750nm); near infrared (750nm-2500nm). Preferably the wavelength is between 700-1000nm, or preferably 800-900nm. Example wavelengths are 815nm and 850nm which may be output, for example from one or more VCSEL's. Other useable wavelength ranges are discussed in other examples herein. EM radiation may be continuous wave or pulsed and/or have a time dependent intensity profile. The polarisation of the EM radiation may be linear, circular or elliptical. The polarisation of the different EM emitters may be the same or different. The focussing assembly 510 may contain transmissive and/or reflective elements such as lenses and mirrors respectively. Examples of focussing assemblies are described elsewhere herein. The focussing assembly is configured to focus the EM light to a diffraction limited spot. Preferably the diffraction limited spots of the EM distributions reside at an image plane of the focussing assembly and, for example, act to form the trap 502 or control qubit state transitions. Preferably the traps are sized to trap only a single matter particle. The degree of overlap of intensity distribution may be any degree of overlap including, but not limited to: overlapping at least at the $1/e^2$ boundary of each intensity distribution; overlapping at the intensity profile where the intensity is at least ½ the full intensity of each respective spot.

The spatial extent of any of the EM distributions along a single dimension, for example along at least one of the directions about an image plane, may be any of, but not limited to the following ranges (micro-meters) 0.1-5; 1-3; 1.5-2.5, preferably 2 +/- 0.2. The spatial distribution of EM radiation, for example optical light, from an emitter focussed to an intensity distribution typically extends in all three directions associated with a cartesian axis system. If the EM distributions 514a/b are located about an image plane of the focussing assembly then the radiation spots, for example traps, may have a 2D profile extending about the image plane. Taking the image plane to be a plane defined by and extending along X and Y axes, then this 2D profile is about the X-Y plane. The EM distribution that defines the radiation spot, for example the trap, may extend along the z direction as well. Figure 5a conceptually shows the EM distributions extending in the Y and Z directions, however the EM distributions would extend in the X direction as well.

For systems that output a plurality of radiation spots, the system may use the same or a different focussing assembly for each radiation spot. Any one or more EM spots formed by the system may comprise EM distributions from two or more emitters, preferably between 2-10 emitters, more preferably 3-6 emitters, for example, 4 emitters. The EM radiation from different emitters may be coherent or incoherent with each other. A spatial light modulator or other actuator may be used to direct light from one or more of the emitters and move the intensity distribution in the interaction region, for example affecting different degrees of spatial overlap. The interaction region is preferably an image plane of the focussing assembly. The object plane of the focussing assembly may be one or more planes intersecting the outputs of one or more emitters. The plurality of emitters may be surface emitting EM sources. One or more of the surface emitting EM sources may be a VCSEL. One or more of the surface emitting EM sources may be a VLED. The plurality of emitters may form part of a source assembly as described elsewhere.

One or more modulators may be optically coupled to one or more of the emitters. Preferably a different modulator is optically coupled to a separate, different emitter such that each one of the plurality of modulators are associated, with a different emitter. Preferably at least one, preferably a plurality, preferably all, of the modulators have their modulating function independently controllable.

The system may be configured such that: I) the EM trap is a first EM trap; II) a first set of two of more of the plurality of emitters output EM radiation with overlapping intensity distributions in the trapping region forming the first EM trap; III) a second set of two or more of the plurality of emitter output EM radiation with overlapping intensity distributions in the trapping region forming a second EM trap; the emitters of the first set being different to the emitters of the second set; the EM radiation intensity distribution of the first trap being spatially separated from the EM distribution of the second trap.

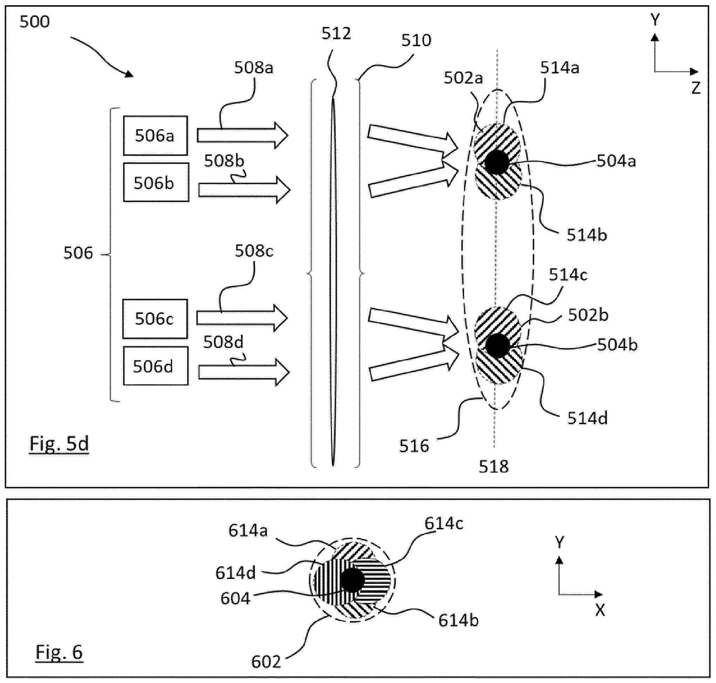

In other words, multiple, spatially separated traps may be formed by different emitters. An example of this is shown in figure 5d wherein like reference numbers represent like features to figure 5a.

Figure 5d is a conceptual example, as such proportions, dimensions and layout do not reflect real-world components and configurations. In figure 5d, there are four emitters 506a-d. Emitters 506a and 506b form trap 502 with overlapping intensity distributions 514a and 514b respectively. Emitters 506c and 506d form trap 502b with overlapping intensity distributions 514c and 514c respectively.

Each trap 502a/b in figure 5d is shown trapping a different single respective matter particle, 504a and 504b respectively. The intensity distributions 514a-d, as with other examples herein, form traps at a focal point wherein the beam waist of the light focussed by the focussing assembly 510 is at a minimum. As with figure 5a, the radiation spots, for example traps, are formed at an image plane 518 of the focussing assembly.

Figure 6 shows an example of having four EM intensity distributions 614a-d forming a trap 602 for trapping a matter particle 604. Figure 6 is a conceptual example therefore dimensions do not reflect real-world dimensions. Figure 6 is a view of the X-Y plane that coincides with an image plane similar to that of figures 5a and 5d. The four EM intensity distributions 614a-d originate from separate EM emitters (not shown). The emitters may use a common set of one or more optical elements in the focussing assembly or different sets. The emitters may be positioned with respect to each other, for example on a common device, such that the desired positions of the EM intensity distributions in the trapping region may be achieved using the same elements of the same focussing assembly. For the pattern shown in figure 6, the emitters may be positioned in a diamond-like configuration wherein a different emitter is located at an apex of the diamond wherein the diamond shape lies along an object plane of the focussing assembly.

Each of the distributions 614a-d partially overlaps with all the other three respective distributions 614a-d of the same trap 602. In other similar examples traps may be formed with multiple intensity distributions wherein not all intensity distributions overlap with each other distribution of the same trap. In other words, each EM intensity distribution originating from EM radiation from a particular emitter, overlaps with at least one other EM intensity distribution originating from EM radiation from a different emitter. In other examples the focussing assembly may comprise different sets of focussing structures for at least two different emitters. A focussing structure includes components such as lenses, for example bulk-optic or micro-lenses or mirrors. In one example a set of microlenses are formed onto a common component wherein each microlens is for focussing light from one or more emitters that are different emitters focussed by another microlens. A micro-lens may be sized, shaped and positioned to focus (or otherwise direct) light from one or more emitters. A set of emitters that are associated with a microlens may be a set of emitters for a particular trap. In other words, the focussing assembly may be configured to have a separate microlens (or equivalent focussing micro-mirror) for each trap.

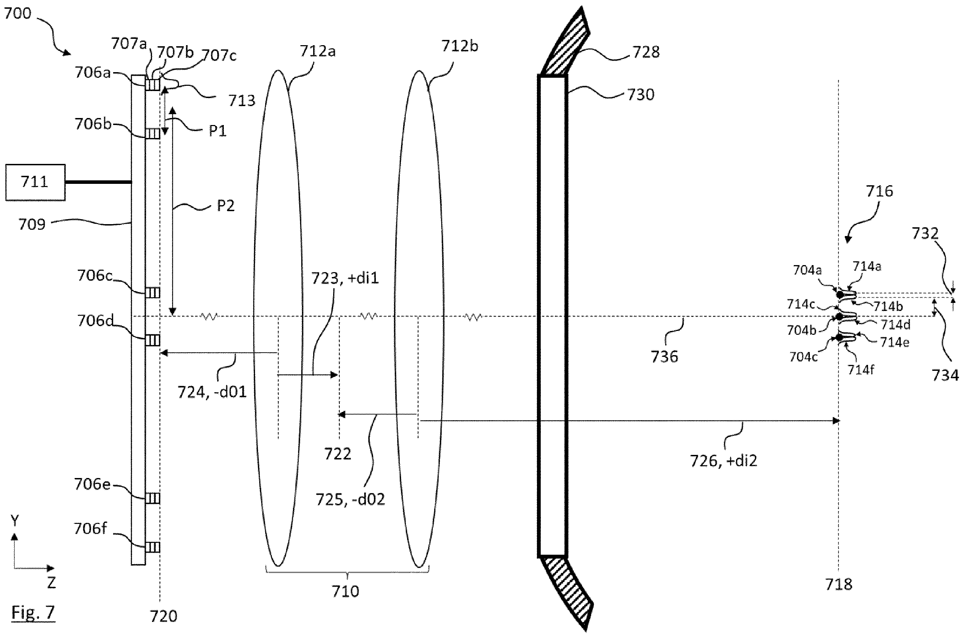

Figure 7 shows an example of a system 700 associated with figure 5A. In this example a plurality of VCSELs 706a-f are co-located upon a single device 709. In this example the single device 709 is formed from a substrate having successively grown and patterned layers of material, such as semiconductor material, that form the VCSELs 706a-f. The device in this example is a chip. The chip in this example shows six VCSELs however it should be understood that in similar examples fewer or more electromagnetic sources maybe included. Each VCSEL in this example is formed during the same set of fabrication procedures so that the structure of each VCSEL is substantially the same.

Figure 7 shows the topmost VCSEL 706a labelled to identify the three main different regions. Region 707a is an n-type Bragg reflector. Region 707b is a quantum well layer comprising one or more quantum wells. Region 707c is p-type Bragg reflector. The VCSEL comprises a resonant cavity defined by the n and p-type Bragg reflectors. Each Bragg reflector comprises a stack of semiconductor layers that reflect light of the output wavelength of desired operation wherein the top Bragg reflector 707c is partially reflecting to allow a portion of the light in the cavity to be emitted outwardly from a surface of the VCSEL facing away from the underlying substrate. It should be understood that the structure shown for VCSEL 706a is the same for the other five VCSELs 706b-f.

Electrical drive circuitry, such a controller 711, contained within a separate component to the chip, is electrically connected to the chip 709. Figure 7 shows a single controller 711, however in similar examples a plurality of similar controllers may be electrically connected to the chip. The electrical connections made to the chip 709 are via one or more electrical wires that physically connect to one or more electrical bond-pads (not shown) on the chip 709. The chip 709 comprises a plurality of on-chip electrical tracks (not shown) that electrically connect the bond pads to each respective VCSEL 706a-f such that at least some of the VCSELs can be independently controlled with respect to other VCSELs. In this example: VCSELS 706a and 706b are controlled by the same electrical signals. In other words, they are both driven by the same electrical signals. Similarly, VCSELs 706c and 706d a co-driven by the same electrical signals; VCSELs 706e and 706f are co-driven by the same electrical signals. Thus, there are three sets of two VCSELs, each set is driven by different electrical signals. In other examples a set can contain more than one, more than two, preferably three-six VCSELS. For each set of two VCSELs the VCSEL pair are separated by a pitch distance P1 along a direction parallel to the major plane of the substrate. The neighbouring and adjacent VCSEL set is separated by a pitch distance P2. The pitch P2 between neighbouring VCSEL sets is the distance between the centre points of two adjacent VCSEL sets wherein the centre point is the mid-point between adjacent VCSELs in the same set. In other words, P2 is the distance, between a) the centre point between two VCSELS of a first set to b) the centre point between two VCSELS of an adjacent second set. Other definitions of centre VCSEL set centre point may be used. For the distance P1, the following discussions underneath assume a centre-to-centre pitch value of distances such that P1 is the distance, between adjacent VCSELs in the same set, from the centre (along an axis parallel to the major plane of the substrate) of the first VCSEL to the centre of the second VCSEL). In this example P1 is 250 micrometres and P2 is 1000 micrometres, although other values of P1 and P2 are usable.

It should also be appreciated that this example shows only three sets of two VCSELs aligned along the Y axis. In other examples the chip may contain VCSELs and VCSEL sets distributed along the X axis.

On the chip 709, the VCSELs are formed on the same surface of the substrate and emit light in a direction perpendicular to the major plane of the substrate. Each VCSEL emits light in a direction parallel to the other VCSELs on the chip 709. The VCSELs 706a-f are directly modulated by the electrical current they directly receive. Direct modulation here meaning that the turning 'off' or 'on' or otherwise varying the EM output intensity of the VCSEL, that in turn controls the intensity of the corresponding EM distribution in the trapping region 716. Direct modulation is therefore provided by the electrical control signals from the controller 711. In some examples the chip 709 may have electrical control functionality (not shown) to receive electrical current from the controller 711 (which may alternatively or additional may act as a DC or AC current or voltage source). Such further electrical control functionality may be used to control the voltage or amount of electrical current going to each VCSEL 706a-f wherein the control signal sent may be different for different VCSELs.

The optical output facets of each of the VCSELs lie on or very close to a plane 720 which acts as an object plane for the focussing assembly 710. To the right of VCSEL 706a in figure 7 is an illustration of a typical EM intensity profile 713 along the object plane 720 output by the VCSEL 706a. This is included for explanation purposes only and to show that the intensity profile output by the VCSEL 706a covers a greater spatial extent that the intensity profile of the same EM radiation in the trapping region 716, particularly the image plane 718 of the focussing assembly 710. It is to be expected that similar or identical intensity profiles are present at the object plane 720 for each of the other VCSELS 706b-f.

The focussing assembly 710 in this example is formed of two convex lenses 712a and 712b. The lenses are aligned such that a central optical axis 736 runs through the centre of each lens 712a/b and also through the centre point between the middle set of VCSELS 706c/d. Lens 712a is closer to chip 709 and resides between lens 712b and the chip 709 such that light passes through lens 712a before passing through lens 712b. In this example the centre point of the VCSEL set 706c/d is also the middle of chip 709, but other examples may not require this.

The double lens configuration of focussing assembly 710 produces a non-inverted image of the focussing assembly's object plane 720 at the focussing assembly image plane 718. The object plane 720 of the focussing assembly is the same as the object plane for the first lens 712a. The distance from the centre of the first lens 712a, called "$O_1$", along the length of the axis 736, to the object plane 720 is the algebraic distance $\overline{O_1A_1}$ = - d01 and labelled 724 in figure 7. The distance from the centre of the first lens 712a, along the length of the axis 736, to the image plane 722 of lens 712a is the algebraic distance $\overline{O_1A_1'} = +$ di1 and labelled 723 in figure 7. The distance from the centre of the second lens 712b, called "$O_2$", along the length of the axis 736, to the same lens's object plane 722 or image plane of lens 712a, is the algebraic distance $\overline{O_2A_2} = -$ d02 and labelled 725 in figure 7. The distance from the centre of the second lens 712b, along the length of the axis 736, to the image plane 718 of lens 712b is algebraic distance $\overline{O_2A_2'} = +$ di2 and labelled 726 in figure 7. The Descartes's conjugate relation for lens 712a is shown in equation 1 wherein $f_1'$ is the algebraic image focal distance of lens 712a. The Descartes's conjugate relation for lens 712a is shown in equation 2 wherein $f_2'$ is the algebraic image focal distance of lens 712b. The magnification m1 of lens 712a is shown in equation 3. The magnification m2 of lens 712b is shown in equation 4. The magnification of the lens assembly 710 ($m_{\text{assembly}}$) is given in equation 5.

The image plane 718 and hence trapping region 716, in this example, are accommodated within a hermetically sealed chamber. Figure 7 shows a portion of the outer wall 728 of the chamber. The outer wall 728 is primarily formed of a material opaque to the VCSEL output EM wavelength, for example a metal such as steel or aluminium. The wall 728 comprises at least one window 730 formed from material at least partially transparent to the VCSEL wavelength, preferably over 50% transparent, preferably over 95% transparent. The window material may be formed of $SiO_2$ or a doped form of the same. The window 730 and wall 728 are physically connected to each other such that a hermetic seal with the wall 728 is formed all the way around the window 730. The chip 709 and focussing assembly are positioned relative to the window (or vice versa) to allow the light output from the focussing assembly to pass through the window and into the chamber. The window has a width, perpendicular to the direction of light propagation, large enough to allow substantially all the light output from focussing assembly to enter the chamber. The material of the window 730 and its shape (including width and thickness) may be factored into the calculations determining image plane position.

$$\frac{1}{f_1'} = \frac{1}{\overline{O_1A_1'}} - \frac{1}{\overline{O_1A_1}}$$

[Equ. 1]

$$\frac{1}{f_2'} = \frac{1}{\overline{O_2A_2'}} - \frac{1}{\overline{O_2A_2}}$$

[Equ. 2]

$$m1 = \frac{\overline{O_1A_1'}}{\overline{O_1A_1}}$$

[Equ. 3]

$$m2 = \frac{\overline{O_2A_2'}}{\overline{O_2A_2}}$$

[Equ. 4]

$$m_{assembly} = m1 \times m2$$

[Equ. 5]

Two lenses are shown in this focussing assembly 710 for this example, however any number of lenses or other imaging components may be used, especially for a better matching between the numeral aperture of the system and the divergence of the sources. In this example, $f_1' = 7.8$ mm; $f_2' = 2.0$ mm; $\overline{O_1 A_1}$ = -400mm; $\overline{O_1 A_1'}$ = 8mm ; $\overline{O_2 A_2}$ = -100mm; $\overline{O_2 A_2'}$ = 2mm . This gives: m1=-0.02; m2=-0.02; m$_{assembly}$=0.004. Not considering the effects of optical aberrations or diffraction limits to spots sizes, the height ho1 of an object on the object plane 720 is imaged into image plane 718 with a decreased height hi2. Thus, an object plane height of 250 micrometres is imaged to a height of 1 micrometre. This is shown in figure 7, although not to scale, wherein: the initial pitch P1 of 250 micrometres is imaged to a smaller pitch 732 of one micrometre in the image plane 718; and the initial pitch P2 of 1000 micrometres is imaged to a smaller pitch 734 of four micrometres in the image plane 718.

The above is one example of a focussing assembly. Another example may be a focussing assembly wherein the distance between the two lenses is equal to the sum of the focal length. In this further example, the magnification would be equal to f2/f1. In other examples the focussing assembly may use an afocal system. The afocal system may be configured to have a collimated entrance beam and a collimated exit beam. The afocal system may be an optical system that produces no net convergence or divergence of the beam, i.e., has an infinite effective focal length. This type of optical system can be created with a pair of optical elements where the distance between the elements is equal to the sum of each element's focal length. It is understood that a focussing assembly may be designed or have its design adapted using optical design software.

Each VCSEL output EM intensity spot size on the object plane 720 is imaged on the image plane 718 in the trapping region 716. Image spot 714a in the image plane 718 corresponds to EM radiation from VCSEL 706a. Image spot 714b in the image plane 718 corresponds to EM radiation from VCSEL 706b. Image spot 714c in the image plane 718 corresponds to EM radiation from VCSEL 706c. Image spot 714d in the image plane 718 corresponds to EM radiation from VCSEL 706d. Image spot 714e in the image plane 718 corresponds to EM radiation from VCSEL 706e. Image spot 714f in the image plane 718 corresponds to EM radiation from VCSEL 706f.

The diffraction limiting effects of the lens assembly 710, and possibly other components affect the minimum spot size at the image plane 718. Typically, this diffraction limit is set by lens diameters and apertures within the path between the object plane 720 and image plane 718. Thus, in the above example, despite the magnification of pitch P1 going from 250 micrometres to 1 micrometre the actual spot sizes of the VCSELs do not get magnified down by the same amount. The imaged VCSEL spot sizes for the example in figure 7 are 2 micrometres. Thus, the imaged VCSEL spot size is greater than the imaged pitch dimension P1. Therefore, the imaged VCSEL spots overlap at the image plane 718. Imaged spot 714a overlaps along the image plane 718 with spot 714b to form a trap that traps an atom 704a. Imaged spot 714c overlaps along the image plane 718 with spot 714d to form a trap that traps an atom 704b. Imaged spot 714e overlaps along the image plane 718 with spot 714f to form a trap that traps an atom 704c.

It is to be understood that this example may be adapted with components, configurations and other features as presented in other examples herein. The adaption may be by addition or replacement. Existing features of this example may be removed. Correspondingly, it is to be understood that other examples herein may be adapted with components, configurations and other features as presented in this example. Such features may include, but are not limited to, any one or more of: details the chip; controllers; EM sources; focussing assembly; environment and equipment accommodating the matter particles; matter particles.

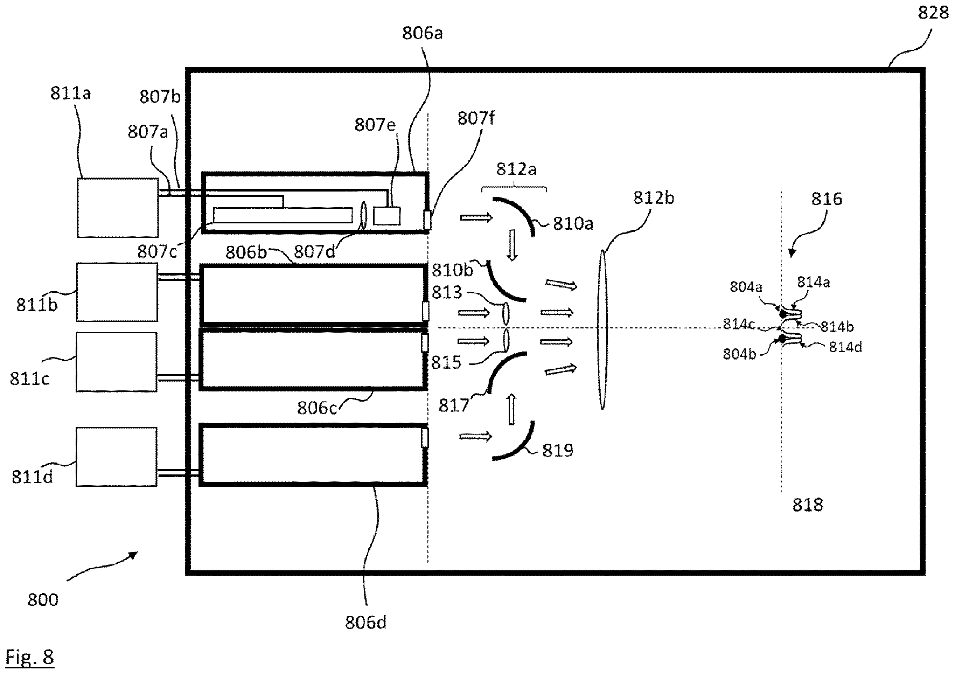

Figure 8 shows a further alternative example of a system 800 associated with figure 5A.

In this example the matter particles 804a/b for trapping in the in the trapping region 816 are ions. The EM radiation is output from a plurality of modules 806a-d. Module 806a is shown with its internal contents however, the other modules 806b-d have similar contents (not shown). Each of the modules 806a-d and the focussing assembly is contained within a chamber wall 828 of a chamber that accommodates the ions 804a/b. Each module is electrically connected 807a/b to a separate electronic module controller 811a-d respectively.

Module 806a comprises an edge emitting laser 807c such as a distributed feedback laser (DFB) or another form of laser such as a gas-based laser. Each module or 'laser-module' 806a-d is individually packaged, hence non-unitary with other laser modules. The laser 807c is connected via an electrical wire, through the wall 828, to the controller 811a. Light output from the laser is continuous wave and constantly output when the trapping system is in operation. The output light is collimated by lens 807d and input into EM modulator 807e. Modulator 807e is controlled by controller 811a via electrical wire 807b which is fed through the wall 828. The modulator is used to modulate the output light, preferably from a zero-output intensity to a full (relative '1') output intensity. The output light is passed through an aperture 807f in the module packaging. The aperture acts to allow through the majority of the light for forming a trap in the trapping region 816 but a blocks stray EM radiation from reaching the trapping area. The aperture 807f may act as a diffraction limiting component that affects the spot size 814a associated with the module 806a. Light output from aperture 807f is reflected by first focussing mirror 810a then second focussing mirror 810b to be incident upon focussing convex lens 812b. Lens 812b focusses the light to form the spot 814a in the trapping region.

Module 808b is identical to module 806a. Light output from its module aperture is instead incident upon convex focussing lens 813 before being input to lens 812b for focussing a spot 814b in the trapping region 816. Spots 814a and 814b act as a composite trap for trapping ion 804a. The EM distributions are shown overlapping along image plane 818 of lens 812b.

In this example different EM sources utilise different focussing components, thus the focussing assembly in this example has a common lens 812b for all EM sources and separate focussing elements 812a for different sources 806a-d. This example may be adapted such that each EM source module 806a-d also has a separate final lens instead of a common lens 812b. The focal power and positioning of the focussing components 812a are different for module 806a and 806b to enable them to utilise the same focussing lens 812b.

Modules 806c and 806d are used to create a composite spot using EM distribution 814c and 814d respectively, to trap ion 804b. The EM pathways between module to image plane 818 are similar to that of modules 806a/b except that module 806c uses convex focussing lens 815 and 812b whilst module 806d uses focussing mirrors 819 and 817 together with lens 812b.

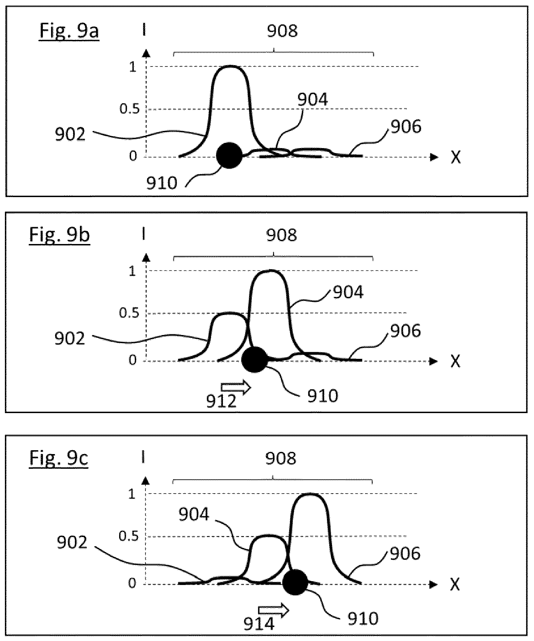

Figures 9a-9c show an example of a plurality of spatial EM distributions or 'spots' in a trapping region used to move a matter particle. Each of the EM intensity ('I') distributions is shown varying along one spatial dimension (x), wherein in practice the spot has a 3D distribution. Each of the spots are configured to be overlapping with adjacent spots provided enough intensity is provided to an overlapping spot. A cluster of overlapping spots form a composite trap 908. In figures 9a-c there is shown three spots however two or more spots may be used to move a matter particle. Each spot is shown to have a relative intensity varying between 0-1.

In figure 9a, the first spot 902 has an intensity of 1 whilst the second spot 904 and third spot 906 have intensities of 0.1. The matter particle 910 is trapped by the composite trap 908 and is biased in the centre of the first spot due to its relatively large intensity compared to the second and third spots.

In figure 9b the first spot 902 is reduced to 0.5 intensity whilst the second spot 904 is increased to full intensity (intensity =1) whilst the third spot 906 keeps its intensity at 0.1. The majority of intensity in the composite trap (or composite spot) 908 has moved from the centre of the first spot 902 towards the centre of the second spot 904, which in turn has moved the matter particle 910 along the positive X direction as shown by arrow 912.

In figure 9c the first spot 903 is reduced to 0.1 intensity whilst the second spot 904 is reduced to 0.5 intensity. The third spot 906 is increased to maximum intensity. The majority of EM intensity in the composite spot 908 has therefore moved towards the centre of the third spot 906. In turn, this has moved the matter particle 910 again along the positive X direction as shown by arrow 914.

Thus, by varying the relative intensities of spots in a composite spot over time a matter particle can be moved in space. The spots may be generated using apparatus and systems described elsewhere herein wherein the spots are typically intensity modulated using one or more electronic controllers either driving EM sources directly or externally modulating their output. A single direction of movement is shown in figures 9a-9c and over three spots, however more spots may be used, and each spot may be intensity modulated to any level to provide the degree of movement required in more than one direction.

The example shown above provides advantages over traps that move a single EM spot using an actuator. Actuators that move the same EM distribution, in space, to move a matter particle may be expensive and imprecise in movement of the matter particle. Fixed position spots, each varying intensity, for example independently, requires fewer moving parts.

A 2D array of EM sources such as VLEDs or VCSELs with a constant periodic x direction pitch and a constant periodic y direction pitch may be used to facilitate the movements shown in figures 9a-c wherein a composite spot is generated for EM sources that are outputting EM radiation and having overlapping spots in the trapping region. Preferably each EM source is independently controllable and/ or has its output EM radiation independently controllable from other EM sources.

Each EM source may give rise to a spot that is associated with a particular point in the trapping region that is different in location to any other point in the trapping region. The point may be collocated with the maximum intensity of the spot. All the EM sources may be mounted or formed upon the same platform or may be divided between multiple platforms. In one example a chip similar to that described for figure 7 is used wherein the chip hosts a 2D array of VCSELs each outputting light in a direction parallel to all other VCSELs. The 2D array is a square grid with constant x and y pitch between successive neighbouring VCSELs. Preferably the x pitch is the same as the y pitch wherein x and y indicate the plane about which the VCSELs are distributed. Preferably the pitch is 250 micrometres although other pitch values are usable. The chip may be used in a system similar to that shown figure 7 or otherwise in other examples herein.

If used with a focussing assembly that overlaps neighbouring spots, then each spot overlaps with at least one other spot. Thus, if all EM sources output EM radiation and each such EM radiation is incident upon the trapping region, the trapping region may comprise a region of continuous EM radiation varying in Intensity across the image plane of the focussing assembly used to focus the EM radiation. The variation in intensity along a direction coming from the natural increase and decrease in intensity of each spot itself and the overlap with another adjacent spot.

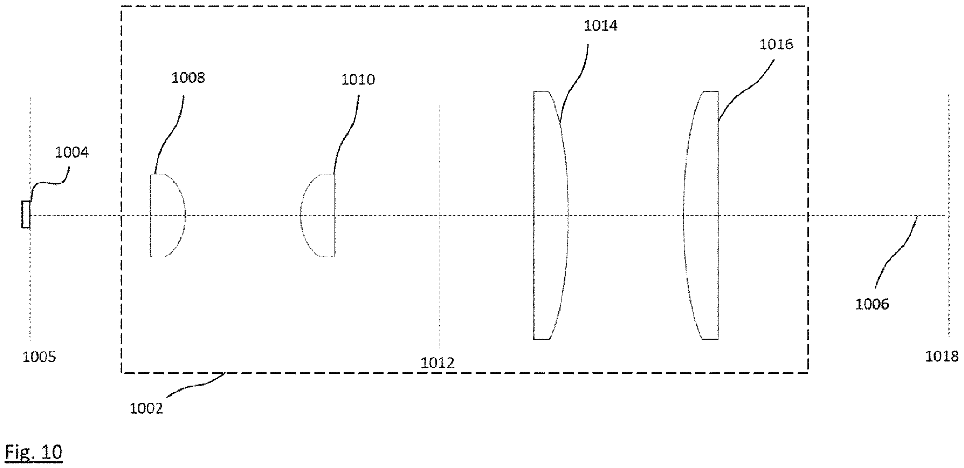

Figure 10 shows an example for a focussing assembly 1002 for optional use with any of the examples herein including examples using surface emitting EM sources such as VCSELS and examples using edge emitting EM sources such as a set of two or more linear arrays of edge emitting VCSELS stacked to form a 2D array.

The components used in the focussing assembly 1002 may be adapted or configured to match with the requirements of any implementation of the examples presented herein. Components of focussing assembly 1002 may be removed or replaced. Furthermore, further components may be added to this example of a focussing assembly 1002. Such further components may include, but are not limited to mirrors, lenses and aperture stops. References to 'light' in this example may refer to any EM radiation usable with the examples herein. The absolute size of components and relative positions shown in the figure are not representative of real implementations of a focussing assembly 1002.

In this example of figure 10, we assume a VCSEL array 1004 is used, however other EM sources may be used, as discussed. An optical axis 1006 extends outwardly away from the VCSEL array 1004 in a direction perpendicular to the plane of the array. The plane of the array being the object plane 1005 for the set of components forming the focussing assembly 1002, in particular the object plane 1005 is the object plane for the first lens 1008 of the assembly 1002. The object plane 1005 being the plane that each of the EM-radiation output facets of the VCSELS resides upon. The optical axis 1006 preferably extends from the mid-point across the extent of the VCSEL array 1004 in both of the orthogonal cartesian directions about the object plane 1005. The optical axis 1006 then passes through the centre of each of the lenses of the focussing assembly 1002, these being the first lens 1008, second lens 1010, third lens 1014 and fourth lens 1016.

The first lens 1008 of the focussing assembly 1002 is a plano-convex lens with the flat 'plano' surface facing the VCSEL array 1004 and being parallel with the object plane 1005. The first lens 1008 resides between the VCSEL array 1004 and the second lens 1010 and receives light from the VCSEL array 1004 and directs the light to the second lens 1010. The first lens 1008 collimates light from the VCSEL array 1004.

The second lens 1010 of the focussing assembly 1002 is a plano-convex lens with the flat 'plano' surface facing directly away from the VCSEL array 1004 and the first lens 1008, and being parallel with the object plane 1005. The second lens 1008 resides between the first lens 1008 and the third lens 1014 and receives light from the first lens 1008 and directs light to the third lens 1014. The first and second lenses 1008, 1010 are configured to image light output from VCSELs on the object plane 1005 onto an intermediate image plane 1012.

The third lens 1014 of the focussing assembly 1002 is a plano-convex lens with the flat 'plano' surface facing the VCSEL array 1004 and second lens 1010, and being parallel with the object plane 1005 and the intermediate image plane 1012. The third lens 1014 resides between the second lens 1010 and the fourth lens 1016 and receives light from the second lens 1010 and directs the light to the fourth lens 1016. The third lens 1014 collimates light from the VCSEL array 1004, as intermediately imaged at plane 1012.

The fourth lens 1016 of the focussing assembly 1002 is a plano-convex lens with the flat 'plano' surface facing directly away from the VCSEL array 1004 and the third lens 1014, and being parallel with the object plane 1005 and intermediate image plane 1012. The fourth lens 1016 resides between the third lens 1010 and the final image plane 1018 and receives light from the third lens 1014 and focusses the light onto the final image plane 1018. The third and fourth lenses 1014, 1016 are configured to image light formed on the intermediate image plane 1012 onto the final image plane 1018 to form regions of EM radiation for interacting with the matter particles, for example, forming traps for atoms.

The total magnification of the focussing assembly 1002 may reduce the size of the VCSEL EM radiation spots on the object plane 1005 by a factor of 20. This magnification reduction may be affected by aberrations and diffraction limits. The first and second lenses 1008, 1010 image light from the object plane 1005 onto the intermediate image plane 1012 with a reduction in magnification of 5 (hence reduction in spatial extent the spots of the VCSELS on the object plane 1005) before they are further reduced in size by lenses 1014, 1016. The orientation, hence facing, of the flat and convex surfaces of each of the lenses 1008, 1010, 1014, 1016 are chosen to reduce aberrations.

General example of controlling intensity of EM radiation regions

Figures 9A-9C show an example where multiple EM regions of minimum beam waist, each originating from a different EM source ('emitter'), are overlapped in space and used to form a composite trap wherein the different emitters are outputting different amount of EM radiation over time to change the spatial intensity distribution of the composite trap to move a matter particle. There is also presented a more general system for imparting EM radiation distributions that can be intensity controlled. This, more general, system is for forming a plurality of focussed electromagnetic, EM, radiation regions, for interacting with one or more matter particles, the matter particles act as qubits in a quantum computation. The system comprises a source assembly comprising a plurality of emitters. The emitters may be any of the emitters exemplified elsewhere herein, including, but not limited to VCSELS. Each emitter is configured to generate and output EM radiation. The plurality of emitters comprises at least a first emitter and a second emitter. The source assembly is configured to independently change the intensity of EM radiation output from the assembly from the first emitter and the second emitter. This may be done through a number of ways including any disclosed in other examples herein such as directly modulating the emitter or controlling an external modulator that receives EM radiation from an emitter and outputs modulated EM radiation in accordance with one or more control signals (such as electrical control signals from an electronic controller).

The system also comprises a focussing assembly. The focussing assembly may be a focussing assembly of any of the other examples herein. The focussing assembly for this system comprises one or more EM focussing elements. The focussing assembly is configured to focus EM radiation to form a first focussed EM region, of the plurality of EM regions, using EM radiation output from the first emitter. The focussing assembly is configured to focus EM radiation to form a second focussed EM region, of the plurality of EM regions, using EM radiation output from the second emitter; the first EM region occupying a different portion of space to the second EM region. The portions of space are typically in a particle trapping region of a quantum computer performing the computation. An example would be in a region in a vacuum chamber.

The system is configured in at least one or both of the following ways.

Firstly, the source assembly may be further configured such that the first and second emitters are upon a unitary device. Secondly, the EM regions may form traps for the matter particles.

The unitary device may be, for example, a common package accommodating or otherwise housing a plurality of emitters that at some point during their formation are separated and not mechanically joined or linked, for example being separate chips hybrid integrated into a common package wherein electrical signal wires are connected to the package. Another example of a unitary device is where the first and second (and optionally further emitters) are co-located on a common substrate. In this example, the emitters may be on the same chip and/or share one or more material layers (such as a substrate or undercladding layer). Typically, emitters that are unitary are formed from the same deposition and/or patterning/etching processes.

The above system is advantageous in that the ability to independently change the intensity of different EM regions, which in turn may be interacting with different matter particles, means that the system can be used to provide another level of control of the qubits in the computation.

This control may be forming the EM radiation regions for trapping atoms. Additionally, or alternatively the EM regions may be used for other purposes such as individually addressing the matter particles such as to perform quantum computation operations. Quantum computation operations may include inputting one or more EM pulses that are required for the computation wherein the computation may be analogue or gated.

In some examples, the matter particles may be acted on by other stimuli to perform the quantum computation. Such stimuli may be EM radiation from other EM sources. Such other EM radiation may be used to transition one or more of the matter particles between different energy states, for example (but not limited to) transitioning an atom from a hyperfine ground state to a Rydberg state. Such other EM radiation may comprise a wavelength, or frequency, that is resonant with the atomic transition, i.e., the energy required to transition a matter particle between discrete energy level. The introduction of EM radiation from the above system, i.e., an EM region associated with one or more of the emitters, that interacts with one of the matter particles may be used to influence the transition. Such 'influence' may be any of, but not limited to: a) allowing the transition to take place by providing the matter particle a photon of an appropriate wavelength to complete a multi-photon transition; or b) preventing the transition. A non-limiting example of preventing a transition is when other EM sources provide the required photons to make an energy state transition but the presence of one or more photons from the EM region of the above system acts to block that transition. In this example, the EM radiation from the above system may be non-resonant, or 'off-resonance', from the atomic transition of the matter particles. Exposing matter particles to off-resonant EM radiation shifts the energy levels of the matter particles, so that the initial on-resonant radiation is prevented from exciting the transition. This latter regime may be referred to as "anti-addressing" within a quantum computation context.

## Claims

1. A system for forming a plurality of focussed electromagnetic, EM, radiation regions, for interacting with one or more matter particles; the matter particles act as qubits in a quantum computation;

   the system comprising:

   I) a source assembly comprising a plurality of emitters wherein each emitter is configured to generate and output EM radiation; the plurality of emitters comprising at least a first emitter and a second emitter; the source assembly configured to independently change the intensity of EM radiation output from the assembly from the first emitter and the second emitter;
   II) a focussing assembly comprising one or more EM focussing elements; the focussing assembly configured to focus EM radiation to form:

   a first focussed EM region, of the plurality of EM regions, using EM radiation output from the first emitter;
   a second focussed EM region, of the plurality of EM regions, using EM radiation output from the second emitter;

the first EM region occupying a different portion of space to the second EM region.
wherein:

a) the source assembly is configured such that the first and second emitters are upon a unitary device; and/or,
b) the EM regions form one or more traps for the matter particles.

2. A system as claimed in claim 1 wherein the EM regions overlap in space.

3. A system as claimed in claim 2 wherein the overlapping EM regions form a composite EM trap to hold one or more of the matter particles.

4. A system as claimed in claim 3 wherein the system further comprises an electronic controller configured to output:

I) a first set of signals to the first and second emitters; and,
II) a second set of signals to the first and second emitters;

wherein;

the first set of signals is configured to drive the said emitters to output EM radiation to form the composite trap for holding the said one or more matter particles in a first position in space;
the second set of signals is configured to drive the said emitters to output EM radiation to form the composite trap for holding the said one or more matter particles in a second position in space that is different to the first position;
the system configured to output the second set of signals after outputting the first set of signals.

5. A system as claimed in claim 4 wherein:

the first set of signals comprises a first signal for the first emitter and a first signal for the second emitter;
the second set of signals comprises a second signal for the first emitter and a second signal for the second emitter;
the first signal for the first emitter is configured to drive the first emitter to output EM radiation forming the first focussed EM region at a first intensity;
the first signal for the second emitter is configured to drive the second emitter to output EM radiation forming the second focussed EM region at a second intensity;
the second signal for the first emitter is configured to drive the first emitter to output EM radiation forming the first focussed EM region at a third intensity;
the first signal for the second emitter is configured to drive the second emitter to output EM radiation forming the second focussed EM region at a fourth intensity;
the first intensity is greater than the third intensity;
the fourth intensity is greater than the second intensity.

6. A system as claimed in claim 5 wherein:

the first set of signals forms a first composite trap at a first time;
the second set of signals forms a second composite trap at a second time after the first time;
the first and second composite traps at least partially overlapping in space.

7. A system as claimed in any preceding claim wherein the EM radiation output from the said emitters is for controlling at least one qubit state transition of the quantum computation.

8. A system as claimed in any preceding claim wherein:

the system comprises a set of one or more further emitters for controlling at least one qubit state transition of the quantum computation;
the EM radiation of at least one or the first emitter or second emitter being configured to prevent an atomic transition of a matter particle arising from the one or more further emitters.

9. A system as claimed in claim 8 wherein the EM radiation of the first and/or second emitter comprises an off-resonance wavelength of the qubit state transition.

10. A system as claimed in claim 9 wherein the one or more further emitters comprises a different wavelength than at least one of the first and second emitters.

Fig. 1a

Fig. 1b

Fig. 2A

Fig. 2B

Fig. 2C

Fig. 3A

Fig. 3B

Fig. 3C

Fig. 4A

Fig. 4B

Fig. 5a

Fig. 5b

Fig. 5c

Fig. 5d

Fig. 6

Fig. 7

Fig. 8

EP 4 489 028 A1

Fig. 9a

Fig. 9b

Fig. 9c

EP 4 489 028 A1

EP 4 489 028 A1

Fig. 10

Europäisches
Patentamt

European
Patent Office

Office européen
des brevets

# PARTIAL EUROPEAN SEARCH REPORT

under Rule 62a and/or 63 of the European Patent Convention.
This report shall be considered, for the purposes of
subsequent proceedings, as the European search report

**Application Number**

EP 23 30 6150

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/272006 A1 (KING JONATHAN [US] ET AL) 2 September 2021 (2021-09-02) * paragraphs [0092] – [0095], [0109] – [0119], [0124], [0129], [0130], [0141], [0157], [0254] – [0261]; figures 3A–3D, 15A, 17E * | 1-10 | INV. G21K1/00 G02F1/33 G06N10/40 |
| T | RODRIGO P J ET AL: "Shack-Hartmann multiple-beam optical tweezers", OPTICS EXPRESS,, vol. 11, no. 3, 10 February 2003 (2003-02-10), pages 208-214, XP002285041, * page 2, line 31 – page 4, line 24; figures 1-6 * | | |
| | -/-- | | |

**TECHNICAL FIELDS SEARCHED (IPC)**

G01F
G06N
G21K
G02F

## INCOMPLETE SEARCH

The Search Division considers that the present application, or one or more of its claims, does/do not comply with the EPC so that only a partial search (R.62a, 63) has been carried out.

Claims searched completely :

Claims searched incompletely :

Claims not searched :

Reason for the limitation of the search:

**see sheet C**

| Place of search | Date of completion of the search | Examiner |
|---|---|---|
| Munich | 22 February 2024 | Sewtz, Michael |

EPO FORM 1503 03.82 (P04E07)

Europäisches
Patentamt

European
Patent Office

Office européen
des brevets

**PARTIAL EUROPEAN SEARCH REPORT**

Application Number

EP 23 30 6150

| | DOCUMENTS CONSIDERED TO BE RELEVANT | | CLASSIFICATION OF THE APPLICATION (IPC) |
|---|---|---|---|
| Category | Citation of document with indication, where appropriate, of relevant passages | Relevant to claim | |
| A | OGURA Y ET AL: "Optical manipulation of microscopic objects by means of vertical-cavity surface-emitting laser array sources", APPLIED OPTICS, OPTICAL SOCIETY OF AMERICA, WASHINGTON, DC, US, vol. 40, no. 30, 20 October 2001 (2001-10-20), pages 5430-5435, XP002328789, ISSN: 0003-6935, DOI: 10.1364/AO.40.005430 * page 4, column 1, line 15 – page 5, column 1, line 8 * ----- | 1-10 | |
| | | | **TECHNICAL FIELDS SEARCHED (IPC)** |

EPO FORM 1503 03.82 (P04C10)

page 2 of 2

Europäisches
Patentamt

European
Patent Office

Office européen
des brevets

**INCOMPLETE SEARCH
SHEET C**

Application Number

EP 23 30 6150

```
Claim(s) completely searchable:
        -

Claim(s) searched incompletely:
        1-10

Reason for the limitation of the search:

Following an invitation pursuant to Rule 63(1) EPC)), the applicant has
filed a statement indicating the subject-matter to be searched (Rule
63(1) EPC). A search which was limited to the subject-matter, which was
sufficiently disclosed, has been carried out, see separate sheet.
```

## ANNEX TO THE EUROPEAN SEARCH REPORT
## ON EUROPEAN PATENT APPLICATION NO.

EP 23 30 6150

This annex lists the patent family members relating to the patent documents cited in the above-mentioned European search report.
The members are as contained in the European Patent Office EDP file on
The European Patent Office is in no way liable for these particulars which are merely given for the purpose of information.

22-02-2024

| Patent document cited in search report | Publication date | Patent family member(s) | | Publication date |
|---|---|---|---|---|
| US 2021272006 A1 | 02-09-2021 | AU | 2020433835 A1 | 29-09-2022 |
| | | CA | 3174451 A1 | 10-09-2021 |
| | | CN | 115516469 A | 23-12-2022 |
| | | EP | 4115352 A1 | 11-01-2023 |
| | | JP | 2023520127 A | 16-05-2023 |
| | | KR | 20220149584 A | 08-11-2022 |
| | | US | 2021272006 A1 | 02-09-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021112948 A

- US 7615789 B2

**Non-patent literature cited in the description**

- **M. MAZZANTI et al.** Trapped Ion Quantum Computing using Optical Tweezers and the Magnus Effect. *arXiv:2301.04668v1*, 11 January 2023